# EUROPÄISCHE PATENTSCHRIFT

(11) **EP 3 938 678 B1**
(45) Veröffentlichungstag und Bekanntmachung des Hinweises auf die Patenterteilung: **04.01.2023**
(21) Anmeldenummer: 20711539.5
(22) Anmeldetag: 09.03.2020
(51) Int. Cl.: F16G 13/16

(54) **HYBRIDE ENERGIEFÜHRUNGSKETTE FÜR GROSSE FREITRAGENDE LÄNGEN**
HYBRID ENERGY CHAIN FOR LARGE CANTILEVERED LENGTHS
CHAINE PORTE-CABLES HYBRIDE POUR DE GRANDES LONGUEURS AUTOPORTANTES

(30) Priorität: 09.03.2019 DE 202019101354 U
(43) Veröffentlichungstag der Anmeldung: 19.01.2022
(73) Patentinhaber: Igus GmbH, 51147 Köln (DE)
(72) Erfinder: HERMEY, Andreas, 53773 Hennef (DE); YILMAZ, Bilal, 50739 Köln (DE)
(74) Vertreter: Lippert Stachow Patentanwälte Rechtsanwälte
(86) Internationale Anmeldenummer: PCT/EP2020/056215
(87) Internationale Veröffentlichungsnummer: WO 2020/182727

(56) Entgegenhaltungen:
- DE-A1- 3 121 912
- DE-U1-202015 101 707
- GB-A- 2 515 242

## Beschreibung

Die Erfindung betrifft allgemein eine Energieführungskette zur dynamischen Führung von Versorgungsleitungen, wie Kabeln, Schläuchen oder dgl., zwischen zwei Anschlussstellen von denen mindestens eine beweglich ist. Eine Energieführungskette, auch Schleppkette (Engl. drag chain) oder Kabelschlepp (Engl. cable carrier) genannt, dient insbesondere zum Schutz der geführten Leitungen gegen ungewollte Beanspruchung.

Die Erfindung betrifft insbesondere eine in einer Ebene, z.B. horizontal oder senkrecht, verfahrbare Energieführungskette mit zwei Trumen und dazwischen einem Umlenkbereich mit vorgegebenem Krümmungsradius. Dabei soll ein beweglicher Trum über eine große Länge ungestützt bzw. freitragend verfahren bzw. ausfahren können. Anwendungen mit großer freitragender Länge bei relativ geringer dynamischer Beanspruchung bzw. geringer Verfahrhäufigkeit sind beispielsweise Teleskopausleger, Hebebühnen, Baumaschinen, etc.

Energieführungsketten haben typisch Kettenglieder mit seitlich gegenüberliegenden Kettenlaschen. Die Kettenlaschen sind zu seitlichen Laschensträngen in Längsrichtung gegeneinander schwenkbar miteinander verbunden und überlappen sich dabei jeweils mit einem von zwei Überlappungsbereichen. Die Kettenglieder begrenzen einen Aufnahmeraum, in dem die Versorgungsleitungen geführt und gehalten sind.

Für die Eigenschaften einer Energieführungskette ist das Material der Kettenlaschen von entscheidender Bedeutung. Je nach Anforderungen der Anwendung werden, typisch entweder Kettenlaschen aus Metall, z.B. Stahl oder Aluminium, oder häufiger Kettenlaschen aus Kunststoff, typischerweise als Spritzgussteile aus einem ggf. faserverstärkten thermoplastischen Polymer, eingesetzt.

Kettenlaschen aus Metall können sehr hohe Zugkräfte aufnehmen und haben hohe mechanische Festigkeit, insbesondere hohe Biegefestigkeit bei hoher Steifigkeit. Dies ist insbesondere für Anwendungen mit großen freitragenden Längen, d.h. einem nicht abgestützten Kettentrum mit langer freitragender Spannweite, von Vorteil. Kettenlaschen aus Metall bewirken jedoch u.a. ein relativ hohes Eigengewicht der Energieführungskette und erlauben nicht dieselben Freiheiten in der Gestaltung, die mit Kunststoff-Kettenlaschen, meist in Spritzgusstechnik gefertigt, möglich sind.

Kettenlaschen aus Kunststoff bauen leichter und können auch hohe Stoßkräfte ohne dauerhafte Verformung absorbieren, dank hoher Elastizität im Vergleich zu Metall. Bedingt durch die Elastizität bzw. das vergleichsweise geringere Elastizitätsmodul sind sehr große freitragende Längen jedoch mit Kettenlaschen aus Kunststoff meist nur mit vergleichsweise großen Wandstärken realisierbar.

Es wurde bereits das Bedürfnis erkannt, in Energieführungsketten Eigenschaften von Metall- und Kunststoff-Kettenlaschen vorteilhaft zu kombinieren, um die jeweils gewünschte Vorteile beider Typen zu nutzen. Eine Energieführungskette, welche in den Laschensträngen kraftübertragende Bauteile aus unterschiedlichen Werkstoffen aufweist, beispielsweise aus Kunststoff und Metall, wird vorliegend als hybride Energieführungskette verstanden.

In WO 2017/136827 A1 bzw. US 9,803,721 B2 wurde ein hybride Energieführungskette vorgeschlagen, welche unter Verdopplung der Laschenstränge zu jeder Seite einen Laschenstrang aus Seitenteilen aus Kunststoff und zusätzlich hierzu einen Laschenstrang aus Kettenlaschen aus Stahlblech aufweist. Die Seitenteile bzw. Kettenlaschen aus Kunststoff sind hierbei gekröpft ausgeführt, mit seitlich versetzten Überlappungsbereichen, die zusammenwirkende Anschläge zur Schwenkwinkelbegrenzung und eine Aufnahme für einen separaten Schwenkbolzen umfassen. Die Anschläge der Kunststofflaschen sind dabei so dimensioniert, dass diese wirken bevor Anschläge der Metalllaschen anschlagen. Die Kettenlaschen aus Stahlblech sind dabei als alternierende Innen- und Außenlaschen angeordnet, wobei die Innenlaschen jeweils zwei Überlappungsbereiche mit Vorsprüngen, soz. als männliche Verbinder, und die Außenlaschen jeweils zwei Überlappungsbereiche mit Durchbrüchen, soz. als weibliche Verbinder, aufweisen. Jedes Kettenglied besteht somit aus vier Seitenteilen, nämlich zwei Laschen aus Kunststoff und zwei Laschen aus Metall, wobei diese Laschen durch verschraubte Querstege verbunden sind. Die Bauweise gemäß WO 2017/136827 A1 ist somit sehr aufwendig. Der Material- und Montageaufwand entspricht im Wesentlichen dem summierten Aufwand von zwei Energieführungsketten. Weiterhin sind für jeden gewünschten Radius im Umlenkbogen entsprechend jeweils vier passende Bauteile erforderlich. Somit ist das Eigengewicht wegen doppelter Laschenanzahl relativ hoch, was u.a. dem Ziel großer freitragender Längen entgegensteht.

DE 100 12 298 A1 offenbart eine Energieführungskette, die schwenkbar miteinander verbundene Kettenlaschen aus Metall aufweist. Jeweils zwei Kettenlaschen sind in ihrem Überlappungsbereich durch ein Kunststoff-Seitenteil verbunden. Die Kettenlaschen weisen im Überlappungsbereich jeweils Durchbrüche auf, in welche Vorsprünge eines jeweils zugeordneten Seitenteils eingreifen, um die Schwenkachse und den zulässigen Schwenkwinkel zu definieren. Der Durchmesser des kreisrunden Kunststoff-Seitenteils entspricht dabei der Fläche des Überlappungsbereichs der verbundenen Kettenlaschen aus Metall. Somit wird das Gewicht der Kette gegenüber WO 2017/136827 A1 reduziert, allerdings stellt die mechanische Verbindung der Kettenlaschen durch das Kunststoff-Seitenteil einen Schwachpunkt dar. Zur Sicherung gegen seitliches Lösen wird eine zusätzliche metallische Buchse mit einem Bund vorgeschlagen, wodurch Mehrkosten in Material und Montageaufwand entstehen.

Eine weitere Lösung wurde zuvor mit der hybriden Energieführungskette aus DE 197 07 966 A1 , DE 31 21 912 A1 bzw. US 6,161,372 A vorgeschlagen. Hierbei werden spezielle Kettenlaschen vorgesehen, die einen laschenförmigen Kern mit einem diesen wenigstens teilweise umgebenden Kernmantel aufweisen. Der Kern ist aus einem Material hergestellt, das gegenüber dem Kernmantel eine höhere Festigkeit aufweist. So können die Vorteile von z.B. Metalllaschen und Kunststofflaschen in derselben Kettenlasche vereint werden, d.h. es ist hier keine Verdopplung der Kettenlaschen erforderlich. Die für sich hybrid ausgeführten Kettenlaschen werden jeweils mittels zwei komplementären Verbindungsteilen aus Kunststoff verbunden. Auch in DE 103 43 263 A1 wurde eine Kettenlasche mit einem hochfesten Kern vorgeschlagen. Diese beiden Lösungen sind hinsichtlich des Eigengewichts deutlich besser, als die erstgenannte. Die Herstellungskosten derartiger hybrider Kettenlaschen sind jedoch vergleichsweise hoch, es muss z.B. ein zusätzlicher Beschichtungsprozess vorgesehen werden. Zudem bleibt der Montageaufwand ähnlich wie bei üblichen Metalllaschen, d.h. höher als mit Kettenlaschen aus Kunststoff möglich und üblich.

Ausgehend vom vorgenannten Stand der Technik besteht eine erste Aufgabe der vorliegenden Erfindung mithin darin, eine hybride Energieführungskette vorzuschlagen, welche Vorteile von Kunststoff-Kettenlaschen und Kettenlaschen aus einem Material mit höherer Festigkeit vereint, wobei die Energieführungskette zugleich aus weniger Einzelteilen bzw. bei hoher Modularität und/oder mit weniger Montageaufwand herstellbar sein soll. Diese Aufgabe wird nach dem ersten Aspekt der Erfindung gelöst durch eine Energieführungskette nach Anspruch 1 und ein Kettenglied nach Anspruch 17. Die neue Energieführungskette soll zudem ein geringes Eigengewicht haben.

Ferner wird gemäß einem weiteren Aspekt ein neuartiger Trennsteg für eine Energieführungskette vorzuschlagen, welcher als Sicherung gegen ungewolltes Ablösen der Querstege verwendbar ist. Dieser Trennsteg ist jedoch insbesondere auch für eine Energieführungskette nach dem ersten Aspekt der Erfindung geeignet.

### ERSTER ASPEKT (HYBRIDE ENERGIEFÜHRUNGSKETTE)

Gemäß dem ersten Aspekt der Erfindung wird bei einer gattungsgemäßen Energieführungskette nach dem Oberbegriff aus Anspruch 1 die erste Aufgabe schon dadurch gelöst, dass aufeinanderfolgende Kettenlaschen aus einem Material mit vergleichsweise hoher Festigkeit und/oder hoher Steifigkeit, insbesondere einem vergleichsweise größeren Elastizitätsmodul, jeweils mit Durchbrüchen in beiden Überlappungsbereichen ausgeführt sind und diese Durchbrüche bei aufeinanderfolgenden Kettenlaschen jeweils zumindest teilweise überlappen, wobei weiterhin vorgesehen ist, dass zu jeder zweiten dieser Kettenlaschen ein Seitenteil aus Kunststoff vorgesehen ist, welches jeweils in beiden Endbereichen Vorsprünge aufweist, mit denen es durch die überlappenden Durchbrüche von jeweils zwei Kettenlaschen greift, nämlich einer zugeordneten Kettenlasche und der jeweils am entsprechenden Endbereich angrenzenden folgenden Kettenlasche.

Vorsprünge des ersten Endbereichs des Seitenteils können somit durch die Durchbrüche des ersten Überlappungsbereichs der zugeordneten Kettenlasche hindurchgreifen, und Vorsprünge des zweiten Endbereichs des Seitenteils können somit durch die Durchbrüche des anderen, zweiten Überlappungsbereichs der zugeordneten Kettenlasche hindurchgreifen. Dabei kann das Seitenteil mit dessen Vorsprüngen die dem Seitenteil zugeordnete Kettenlasche in ihrem ersten Überlappungsbereich mit einer ersten innerhalb des Laschenstrangs benachbarten Kettenlasche, und in ihrem zweiten Überlappungsbereich mit einer zweiten innerhalb des Laschenstrangs benachbarten Kettenlasche verbinden. Die Vorsprünge des Seitenteils können dabei in beiden Überlappungsbereichen jeweils durch die Durchbrüche von zwei Kettenlaschen, der zugeordneten Kettenlasche und der mit ihr innerhalb des Laschenstrangs benachbarten Kettenlasche hindurchgreifen. Jedes Seitenteil kann somit drei im Laschenstrang aufeinanderfolgende Kettenlaschen schwenkbar miteinander verbinden. Dabei können jeweils zwei dieser drei Kettenlaschen relativ zum Seitenteil schwenken, da die dem Seitenteil zugeordnete Kettenlasche in beiden ihren Überlappungsbereichen mit diesem Seitenteil verbunden ist.

Dabei ist das Seitenteil gegenüber der ihr zugeordneten Kettenlasche, durch dessen beide Überlappungsbereiche es durchgreift nicht drehbar. Hierdurch wird u.a. eine stabilere, weniger anfällige Gelenkverbindung ermöglicht.

Jede Gelenkverbindung kann insbesondere durch jeweils einen Überlappungsbereich einer Kettenlasche, einen Überlappungsbereich einer anderen Kettenlasche und einen von zwei Endbereichen eines Seitenteils gebildet sein, wobei das Seitenteil einer der zwei verbundenen Kettenlaschen zugeordnet ist. Die andere Kettenlasche kann mit einem ihrer beiden Überlappungsbereiche zwischen einem Endbereich des Seitenteils und der einen Kettenlasche aufgenommen sein, der das Seitenteil zugeordnet ist.

Die Längsabmessung des Seitenteils aus Kunststoff in Längsrichtung des Laschenstrangs bzw. der Energieführungskette mindestens der Kettenteilung (Abstand zwischen den Schwenk- bzw. Gelenkachsen in Längsrichtung). Die Grundfläche des Seitenteils aus Kunststoff (in Seitenansicht) kann vorzugsweise im Wesentlichen der Grundfläche der Kettenlaschen entsprechen, dies ist jedoch nicht zwingend. Die Grundfläche des Seitenteils aus Kunststoff kann geringfügig kleiner gewählt sein, z.B. sodass lediglich die Metall-Kettenlaschen mit ihren Schmalseiten an Auf- bzw. Ablageflächen anliegen. Vorzugsweise beträgt die Grundfläche des Seitenteils > 50% der Grundfläche der Kettenlasche.

Die Kettenlaschen aus dem Material höherer Festigkeit und/oder höherer Biegesteifigkeit können somit in ihren Überlappungsbereichen zur Verbindung der Laschen ausschließlich als Aufnahmen dienende Durchbrüche, bzw. weibliche Verbindungsbereiche, aufweisen, was eine besonders einfache Bauweise dieser Kettenlaschen, insbesondere als Gleichteile, erlaubt. Die Seitenteile aus Kunststoff hingegen können eine komplexere Geometrie aufweisen, mit vorstehenden Vorsprüngen die als männliche Verbindungselemente die Kettenlaschen anhand der Durchbrüche bzw. weiblichen Verbindungsbereiche miteinander. Die Gestaltung ist somit optimal an bereits bewährte Fertigungsprozesse angepasst und es werden keine speziellen Techniken, wie z.B. eine Beschichtung, benötigt.

Dabei sind erfindungsgemäß Vorsprünge des Seitenteils zur Begrenzung des relativen Schwenkwinkels zweier aufeinanderfolgender Kettenlaschen oder zur gelenkigen, schwenkbaren Verbindung zweier aufeinanderfolgender Kettenlaschen oder aber, vorzugsweise zu beiden vorgenannten Zwecken vorgesehen.

Die erfindungsgemäß vorgeschlagene Bauweise mit Seitenteilen aus Kunststoff zusätzlich zu Kettenlaschen aus einem anderen Werkstoff mit höherer Festigkeit bzw. mit größerem Elastizitätsmodul soll zumindest in einem Längsabschnitt der Energieführungskette bzw. jedes Laschenstrangs vorgesehen werden, insbesondere in einem im kritischen Bereich, welcher bei bestimmungsgemäß freitragendem Trum den höchsten Belastungen bzw. Verformungskräften ausgesetzt ist. Die Laschenstränge können jedoch zur Vereinfachung überwiegend oder vollständig durchgehend in der vorgeschlagenen hybriden Bauweise hergestellt sein, um spezielle Übergangsteile zu vermeiden.

Die hohe mechanische Festigkeit der Kettenlaschen erlaubt dabei sehr große freitragende Längen bei vergleichsweise geringen Wandstärken, wie mit Ketten aus Metalllaschen erzielbar. Die Kettenlaschen können dabei eine vergleichsweise einfache und besonders preiswert zu erzielende aber dennoch hochfesten Bauweise aufweisen. Die Kettenlaschen können insbesondere ausschließlich mit weiblichen Verbindern, d.h. z.B. ohne vorstehende Teile zur Herstellung einer Gelenkverbindung, ausgeführt sein. Der summierte Flächenanteil dieser Durchbrüche bzw. Aussparungen kann dabei dank hoher Festigkeit durchaus >40%, insbesondere im Bereich von 40%-60%, der gesamten Grundfläche (begrenzt durch die Außenkontur) der Kettenlasche ausmachen, d.h. das Eigengewicht wird weiter reduziert.

Die Seitenteile aus Kunststoff andererseits erlauben es, wünschenswerte Vorteile konventioneller Kunststofflaschen in der Energieführungskette bzw. den Kettengliedern zu nutzen. Die Seitenteile können insbesondere eine komplexere Geometrie aufweisen, welche eine einfache, schnelle und ggf. werkzeugfreie Montage ermöglicht.

Durch die Verbindung von aufeinanderfolgenden Kettenlaschen aus dem Werkstoff höherer Festigkeit bzw. Steifigkeit anhand der Seitenteile aus Kunststoff, lässt sich gegenüber dem vorgenannten Stand der Technik auch die Anzahl der erforderlichen Bauteile und Montageschritte spürbar reduzieren.

Das Elastizitätsmodul (auch E-Modul, Elastizitätskoeffizient oder Youngscher Modul genannt) des Werkstoffs der Kettenlaschen soll dabei vorzugsweise mindestens das dreifache, vorzugsweise mindestens das Fünffache, vorzugsweise mindestens das Zehnfache des Elastizitätsmoduls des Kunststoffs der Seitenteile betragen, um eine spürbare Vergrößerung der freitragenden Länge gegenüber Kunststoff-Seitenlaschen zu erzielen. Das Elastizitätsmodul des Werkstoffs der Kettenlaschen kann z.B. ≥ 50MPa, vorzugsweise ≥ 70MPa betragen. Der Kunststoff der Seitenteile, z.B. ein glasfaserverstärktes Polyamid, kann demgegenüber ein E-Modul <10 MPa aufweisen. Die Kraftübertragung erfolgt durch die Kettenlaschen mit hoher Festigkeit und lediglich durch die Vorsprünge bzw. männlichen Verbinder der Seitenteile aus Kunststoff. Es müssen demnach lediglich diese Vorsprünge aus Kunststoff entsprechend für den Betrieb ausreichend fest, insbesondere gegen Scherwirkung beständig, dimensioniert werden. Die durchgreifenden Vorsprünge aus Kunststoff ermöglichen als Anschläge zudem eine bessere Laufruhe im Vergleich zu konventionellen Ketten aus Metalllaschen. Seitenteile aus Kunststoff können trotz komplexerer Geometrie kostengünstig und leicht bauend, insbesondere in Spritzgusstechnik, hergestellt werden.

Die Seitenteile können, müssen aber nicht aus einem faserverstärkten Kunststoff hergestellt sein.

Die Seitenteile aus Kunststoff sind dabei keine eigentlichen Kettenlaschen, da über ihren Grundkörper keine Zug- oder Schubkraft übertragen werden muss bzw. soll. Sie ermöglichen dennoch die typischen Vorteile von Kunststofflaschen, insbesondere geringer Geräuschpegel an den Anschlägen und hohe Gestaltungsfreiheit für gewünschte Funktionsmerkmale, wie z.B. Rast- oder Schnappverbindungen. Dies kann somit ausgenutzt werden um die einzelnen Kettenglieder möglichst einfach zu gestalten und/oder mit weniger Arbeitsschritten montieren zu können. Mehrkosten für die Seitenteile übersteigen dabei nur unwesentlich die Kosten für die Herstellung typischer Gelenkverbindungen und Befestigung der Querstege, wie mit konventionellen Metallaschen üblich, oder können diese ggf. unterbieten. Zudem ist bevorzugt nur zu jeder zweiten Kettenlasche aus dem Material mit hoher Steifigkeit, ein Seitenteil aus Kunststoff vorgesehen.

Zusätzlich zu den Vorsprüngen bzw. männlichen Verbindungskomponenten an den Seitenteilen, welche in der Anzahl vorzugsweise der Anzahl Durchbrüche einer Kettenlasche entsprechen, können diverse weitere Funktionsbereiche mit geringem Aufwand bzw. geringen Herstellungskosten vorgesehen werden. So kann die Verbindung zu Querstegen bzw. Traversen zur Bildung kastenförmiger Kettenglieder z.B. allein an den Seitenteilen vorgesehen sein. So können die Kettenlaschen besonders einfach, beispielsweise als kostengünstige Stanzteile aus Stahlblech, mit wenigen Fertigungsschritten hergestellt werden.

In bevorzugter Weiterbildung sind - zumindest im kritischen Längsabschnitt der Energieführungskette - zumindest die Kettenlaschen oder die Seitenteile, vorzugsweise beide, jeweils mit einer baugleichen Grundform ausgeführt. Prinzipiell lässt sich jeder Laschenstrang als solcher somit aus nur zwei verschiedenen Bauteilen, nämlich den Kettenlaschen und Seitenteilen aufbauen. Zur Herstellung geschlossener Kettenglieder ist im einfachsten Fall zusätzlich nur noch ein entsprechend der gewünschten Kettenbreite ausgewählter Quersteg erforderlich.

In bevorzugter Weiterbildung haben - zumindest im kritischen Längsabschnitt der Energieführungskette - alle Kettenlaschen und Seitenteile in ihrer Hauptebene senkrecht zur Schwenkachsen eine im Wesentlichen identische Außenkontur bzw. im Wesentlichen identischen Umriss, insbesondere einen jeweils langrunden, ovalen oder ellipsenähnlichen Umriss.

In ihren Überlappungsbereichen haben die Kettenlaschen in einfachster Ausführungsform jeweils mindestens zwei um eine Schwenkachse angeordnete allgemein bogenförmige Durchbrüche, die beispielsweise in Form eines Sektors einer Kreisscheibe ausgeführt sein können. Durch diese Durchbrüche greifen die Vorsprünge des Seitenteils, so dass die Endbereiche der Vorsprünge zur Schwenkwinkelbegrenzung jeweils an korrespondierenden Anschlagflächen eines entsprechenden Vorsprungs anschlagen, um den relativen Schwenkwinkel zu begrenzen. Dabei kann der Schwenkwinkel in beide Richtungen, hin zum maximalen Schwenkwinkel im Umlenkbogen und hin zum minimalen Schwenkwinkel in Strecklage (zur Bildung des gestreckten, insbesondere freitragenden Trums) gleichermaßen bzw. beidseitig mit demselben Vorsprung begrenzt werden. Somit kann ein derartiger Anschlag-Vorsprung insbesondere zwei abgewandte Anschlagflächen aufweisen, die in Schwenkrichtung beidseitig mit den Begrenzungsenden der Durchbrüche zusammenwirken. Die Anschlagflächen sind dabei vorzugsweise als flächige, ebene Flächen ausgeführt.

Die Einstellung des gewünschten Radius im Umlenkbogen erfolgt über die Schwenkwinkelbegrenzung. Mit der erfindungsgemäßen Lösung können alle gewünschten Radien insbesondere über die Dimensionierung der entsprechenden Vorsprünge an den Seitenteilen erzielt werden, d.h. unterschiedliche Winkelbegrenzungen in abgewinkelter Stellung sind bei gleichbleibender Kettenlasche möglich. Dank der Winkelvariation durch unterschiedliche Seitenteile, kann eine einzige Kettenlasche als Gleichteil oder wenige verschiedene Kettenlaschen können für die gesamte Baureihe verwendet werden. Die Kettenlaschen können so in höheren Stückzahlen günstiger hergestellt werden.

Ergänzend oder alternativ können die Kettenlaschen in beiden Überlappungsbereichen jeweils zentrisch auf der gewünschten Schwenkachse auch einen kreisförmigen Durchbruch aufweisen. In diesen kann dann ein korrespondierender, bolzenartig geformter Vorsprung des Seitenteils aus Kunststoff eingreifen, um eine Drehgelenkverbindung zwischen aufeinanderfolgenden Kettenlaschen zu bilden. Dieser Gelenkvorsprung kann als Bolzen für eine typische Aufnahme-/Bolzen-Schwenkverbindung dienen d.h. hat keine Anschlagflächen zur Schwenkwinkelbegrenzung. Die drehbare Verbindung kann jedoch alternativ allein durch geeignete Bogenform der Anschlag-Vorsprünge und korrespondierende Form der Anschlagwirksamen Durchbrüche realisiert werden, um die Bauweise der Seitenteile weiter zu vereinfachen. Die Seitenteile haben in beiden Ausführungsvarianten jeweils zur Gelenkverbindung geeignete Vorsprünge, insbesondere Anschlag-Vorsprünge und/oder Gelenkvorsprünge, in beiden Endbereichen bzw. für zwei in Längsrichtung aufeinanderfolgende Gelenkverbindungen.

Besonders bevorzugt sind die Seitenteile jeweils baugleich und/oder einteilig bzw. einstückig, insbesondere materialeinheitlich aus demselben Kunststoff, hergestellt.

Die Seitenteile können in jedem Laschenstrang ausschließlich einseitig angeordnet sein. Dabei kann jedes Seitenteil in Bezug auf die zugeordnete Kettenlasche die beiden diese überlappenden Überlappungsbereiche angrenzender Kettenlaschen jeweils zumindest teilweise überlappen.

In bevorzugter Weiterbildung haben alle Kettenlaschen und Seitenteile zueinander im Wesentlichen deckungsgleiche Außenkonturen. Die ermöglicht u.a. ein besseres Abrollverhalten des Umlenkbogens.

Die Kettenlaschen sind besonders bevorzugt als ebene Bauteile ohne Kröpfung bzw. Versprung ausgeführt. Die Kettenlaschen sind bevorzugt einteilig und materialeinheitlich bzw. monolithisch aus nur einem Werkstoff ausgeführt, was eine gegenüber hybrider Kettenlaschen aus DE 197 07 966 A1 deutlich günstigere und einfachere Herstellung ermöglicht.

Die Seitenteile sind vorzugsweise mit einem ebenen Grundkörper ohne Verkröpfung bzw. Sprung in seitliche Richtung ausgeführt. Dieser Grundkörper kann verhältnismäßig dünnwandig ausgeführt sein, da der keine Zug-/Schubkräfte übertragen muss.

Die Kettenlaschen können insbesondere aus einem Metallblech, bevorzugt aus Stahlblech, beispielsweise rostfreiem Edelstahl, hergestellt werden. Alternativ zu Stahl bzw. Stahl-Legierungen können die Kettenlaschen auch aus Aluminium oder AluminiumLegierungen hergestellt sein. Alternativ können Kettenlaschen mit hoher Festigkeit, z.B. einem E-Modul >70MPa, auch aus Faserverbundkunststoff, beispielsweise aus einem GFK oder einem CFK, hergestellt werden. Grundsätzlich wird ein nicht oxidierender Werkstoff bevorzugt. Die Kettenlaschen sind vorzugsweise als Flachbauteile mit konstanter Bauteildicke hergestellt. Die Kettenlaschen können beispielsweise in hohen Stückzahlen preiswert als flache Stanzteile oder durch sonstige spanabhebende Bearbeitung oder Schneiden, z.B. aus einem Bandstahl oder Stahlblech, hergestellt werden. Die vorzugsweise konstante Wandstärke bzw. Laschendicke der Kettenlaschen beträgt bevorzugt <10mm und liegt vorzugsweise im Bereich von ca. 1mm bis 5mm, vorzugsweise ca. 2mm bis 4mm.

In bevorzugter Ausführungsform sind die Kettenlaschen so angeordnet, dass diese alternierend zueinander seitlich versetzt sind, d.h. in jedem Laschenstrang innere und äußere Kettenlaschen sich abwechseln bzw. aufeinander folgen. Dabei können sich die Kettenlaschen insbesondere ausschließlich bzw. nur einseitig mit ihren Überlappungsbereichen überlappen. Anders ausgedrückt, in jedem Laschenstrang überlappen sich stets nur zwei einzelne Kettenlaschen aus dem Material hoher Festigkeit. Demnach werden keine gabelförmigen Kettenlaschen aus zwei Einzelteilen verwendet, was Herstellungskosten, Montageaufwand und Gewicht verringert.

Vorzugsweise werden die Seitenteile dabei jeweils außenseitig an jeder zweiten Kettenlasche angeordnet. Zusammen mit der alternierenden Anordnung der Kettenlaschen wird so die Montage weiter vereinfacht.

Eine besonders einfache Montage und kostengünstige Bauweise kann dadurch erzielt werden, dass die Verbindung beider Laschenstränge durch Querstege ausschließlich anhand der Seitenteile erfolgt, d.h. indem jeweils zwei gegenüberliegende Seitenteile durch Querstege miteinander verbunden sind. In bevorzugter Ausführungsform wird dies dadurch erzielt, dass am Seitenteil jeweils mindestens ein vorstehender Befestigungszapfen für einen Quersteg vorgesehen ist. Der Befestigungszapfen kann insbesondere an bzw. nahe den Schmalseiten in einem Mittelbereich zwischen den Endbereichen vorgesehen sein. Der Befestigungszapfen kann zum Form- und/oder Kraftschluss mit einem geeigneten Quersteg, insbesondere einer bereits vorhandenen Baureihe bzw. an sich bekannter Bauweise, ausgeführt sein. Vorzugsweise sind jeweils zwei Befestigungszapfen am Seitenteil vorgesehen, insbesondere nahe jeder Schmalseite jeweils ein solcher Befestigungszapfen. Der Befestigungszapfen steht dabei bevorzugt zu derselben Seite vor wie die Vorsprünge, sodass eine flache Außenseite des Seitenteils erzielt wird. Vorzugsweise sind jeweils zwei außenseitige bzw. seitlich gegenüberliegende Seitenteile eines Kettenglieds durch zwei in Höhenrichtung gegenüberliegende separate Querstege miteinander verbunden, insbesondere zu einem kastenförmigen Querschnitt des Kettenglieds.

Die Querstege können vorzugsweise durch eine formschlüssige und kraftschlüssige Verbindung, insbesondere Schnappverbindung, mit dem Seitenteil verbunden werden.

Insbesondere hierzu sind zumindest die Verbindungsbereiche der Querstege vollständig ober überwiegend aus Kunststoff hergestellt. Die Querstege können überwiegend oder integral aus Kunststoff bestehen und z.B. als Spritzgussteile gefertigt sein. Damit wird eine mechanisch günstige und dauerhafte Verbindung mit den Seitenteilen aus Kunststoff ermöglicht. Querstege und Seitenteile können aus demselben Kunststoff oder zumindest mit demselben Basispolymer hergestellt und ggf. faserverstärkt sein.

Mit solchen Befestigungszapfen an den Seitenteilen kann eine einfache Montage der Querstege z.B. durch eine bewährte, robuste Rast- oder Schnappverbindung erfolgen. Dies ermöglicht es, z.B. mit herkömmlichen Querstegen, die Seitenteile und zugeordneten Kettenlaschen werkzeugfrei zu einem Kettenglied mit kastenförmigem Querschnitt zu verbinden. Dazu werden die Querstege nur an den Befestigungszapfen der Seitenteile befestigt, welche insbesondere weiter nach Innen vorstehen als die Vorsprünge der Seitenteile. Mehraufwand für bei Metalllaschen typische Schraubverbindungen wird so vermieden. Wenn Seitenteile nur an jeder zweiten Kettenlasche aus dem festeren Werkstoff vorgesehen sind, wird somit eine halbstegige Bauweise mit Querstegen nur an jedem zweiten Kettenglied realisiert, was Gewicht und Kosten senkt.

Besonders bevorzugt werden die Querstege zugleich genutzt zur seitenstabilen Verbindung der benachbarten Kettenlaschen, insbesondere als Quersicherung von inneren Kettenlaschen gegenüber den angrenzenden äußeren Kettenlaschen bzw. umgekehrt. Hierzu kann der Befestigungszapfen des Seitenteils durch eine entsprechende Aussparung in der jeweils zugeordneten Kettenlasche greifen und durch diese hindurch zur Innenseite hervorragen. In bevorzugter Weiterbildung ist dabei die entsprechende Aussparung der Kettenlasche für den Befestigungszapfen passend bzw. zu diesem konjugiert so dimensioniert, dass die Querstege endseitig am Rand dieser Aussparung anliegen können. So kann der Quersteg die zugeordnete Kettenlasche in seitlicher Richtung bzw. quer zur Längsrichtung der Energieführungskette am jeweiligen Seitenteil festhalten. Dies erlaubt eine besonders einfache, werkzeugfrei und mit wenigen Schritten erzielbare Montage der Laschenstränge. Je nach Anforderungen können die Querstege endseitig in Längsrichtung ausweitende bzw. vorstehende Stützbereiche aufweisen, um die Anlagefläche an der Kettenlasche zu vergrößern. Die Kette insgesamt, Endanschlüsse ausgenommen, kann in der vorgenannten Bauweise insbesondere aus lediglich drei verschiedenen Teilen, nämlich den Kettenlaschen, Seitenteilen und Querstegen zusammengesetzt werden, die jeweils als Gleichteile ausgeführt sein können. Dies vermeidet zudem Montagefehler bzw. reduziert die Komplexität der Fertigung.

Durch Nutzung der Querstege zur seitlichen Befestigung des Seitenteils an der zugeordneten Kettenlasche, kann das Seitenteil ohne zusätzliche Verbinder, insbesondere ohne Verbinderelemente aus Metall wie z.B. Schrauben, Nieten, Bolzen, Buchsen, oder dgl. gesichert werden. Derartige im Stand der Technik übliche Verbinderelemente, welche sich unter Vibrationen lösen können, können dabei vermieden werden, wodurch Gewicht, sowie Kosten bzgl. Material- und Montageaufwand weiter reduziert werden.

Zur Erhöhung der Formfestigkeit der Kettenlaschen bzw. zur Verwendung von Kettenlaschen geringerer Wandstärke bei gleicher maximal freitragender Länge ist es vorteilhaft, zumindest an einer oder vorzugsweise beiden Schmalseiten der Kettenlaschen einen quer bzw. im Wesentlichen senkrecht zur Hauptfläche der Lasche vorstehenden Versteifungsbereich vorzusehen. Ein solcher Versteifungsbereich ist insbesondere bei Blechlaschen vorteilhaft, wirkt ähnlich einem Trägerflansch, und lässt sich kostengünstig durch Umformung der flachen Grundform, z.B. durch Blechabkanten, Umbördeln oder dgl. herstellen. Der Versteifungsbereich dient zur Versteifung der ansonsten vergleichsweise bzw. vollständig flach bauenden Kettenlasche. Die Versteifungsbereiche können, je nach Laschenkontur, in Bezug auf die Längsrichtung bzw. in Seitenansicht, einen geraden oder leicht gekrümmten Verlauf aufweisen. Die Abmessung in Längsrichtung der Kette und senkrecht zur Laschenhauptebene ist vorzugsweise so bemessen, dass die Versteifungsbereiche in beiden Winkelendstellungen einander nicht berühren.

Die verbindungswirksamen Vorsprünge der Seitenteile sind vorzugsweise so dimensioniert, dass sie mit einer Abmessung vorstehen, die größer oder gleich der zweifachen Laschendicke bzw. Materialstärke einer Kettenlasche im Überlappungsbereich beträgt. So können die Vorsprünge vollständig durch zwei aneinander liegende bzw. überlappende Kettenlaschen greifen, ggf. mit einem geringen endseitigen Überstand. Zur Vermeidung unerwünschter Störkanten im Inneren der Kettenglieder sollten die Vorsprünge aber vorzugsweise maximal mit einer Abmessung kleiner als die dreifache Laschendicke nach innen vorstehen. Bevorzugt ist jedoch eine Abmessung bei welcher die Vorsprünge bündig an der Innenseite der inneren bzw. zugeordneten Kettenlasche enden.

Zur Erhöhung der Seitenstabilität der Laschenstränge ist es vorteilhaft, wenn in jedem Endbereich bzw. Überlappungsbereich an zumindest einem, an einigen, oder an jedem Vorsprung, welcher zur Schwenkwinkelbegrenzung dient, jeweils mindestens ein Querfortsatz vorgesehen ist, welcher von der dem Seitenteil zugewandten Kettenlasche hintergreifbar ist, d.h. der unmittelbar angrenzenden Kettenlasche zwischen Seitenteil und diesem zugeordneter Kettenlasche. So kann zumindest, wenn diese Kettenlasche in einer Schwenkrichtung im Anschlag liegt, ein Hintergreifen der Kettenlasche hinter den Querfortsatz am Vorsprung erzielt werden. Dies bewirkt ein zusätzliches seitliches Halten und erfolgt insbesondere, wenn die Kettenlasche mit dem entsprechenden Endbereich der Durchbrüche an der jeweiligen Anschlagfläche der zugehörigen Vorsprünge anliegt.

Die zugeordnete, vorzugsweise innere, Kettenlasche kann über Querstege bereits am Seitenteil seitlich gehalten sein. Querfortsätze zur Seitenstabilisierung an den Vorsprüngen können somit insbesondere so angeordnet sein, dass der Hintergriff jeweils durch die beiden Kettenlaschen erfolgt, welche die zugeordnete Kettenlasche überlappen. Letztere sind vorzugsweise jeweils als äußere Kettenlaschen zwischen der inneren Kettenlasche und dem seitlich äußeren Seitenteil angeordnet. Somit ist kein Überstand der Querfortsätze im Aufnahmeraum für die Leitungen erforderlich.

Die Kettenlaschen sind mit den Querfortsätzen zur Seitenstabilisierung vorzugsweise in der Strecklage der Laschenstränge, d.h. insbesondere auch im freitragenden Trum, wirksam im Eingriff. Es ist ferner möglich, einen solchen Eingriff hinter Querfortsätze der Anschlagvorsprünge auch oder nur für die vollständig abgewinkelte Schwenklage vorzusehen.

Ergänzend oder alternativ zu derartigen Querfortsätzen ist es ebenfalls denkbar, an den bolzenartigen Vorsprüngen zur Drehgelenkverbindung eine Sicherung gegen Seitenverschiebung vorzusehen, wie z.B. eine Rastverbindung, eine Schnappverbindung oder dgl. Beispielsweise können Schnapphaken an den Drehgelenkvorsprüngen vorgesehen sein, welche vorzugsweise zu den Schmalseiten zugewandt bzw. nicht um Zug-/Schubkraftfluss liegen. Geeignete Gelenkbolzen mit Schnapphaken oder dgl. lassen sich als Vorsprünge am Seitenteil günstig in Kunststoff-Spritzgusstechnik realisieren, ggf. ohne Veränderung bzw. Bearbeitung der steiferen Kettenlaschen. Eine Quersicherung kann aber auch als eine Art Bajonettkupplung mit den jeweils angrenzenden Kettenlaschen verwirklicht werden.

Bei der Herstellung der Kettenlaschen wiederum kann vorgesehen werden, dass zumindest einer der Durchbrüche in jedem Überlappungsbereich der Kettenlasche zur Schwenkwinkelbegrenzung wirksam umgeformte Randbereiche und/oder zur Drehgelenkverbindung dienende umgeformte Randbereiche aufweist. So können Scherkräfte bzw. Beanspruchungen der Vorsprünge aus Kunststoff auf eine, im Vergleich zur Querschnittsfläche der Kettenlaschen größere Fläche verteilt werden bzw. die Vorsprünge können entsprechend materialsparender realisiert werden, da die Flächenpressung verringert wird.

Im Betrieb bildet die, vorzugsweise in einer Ebene verfahrbare, Energieführungskette typisch ein erstes Trum, ein zweites Trum und dazwischen einen Umlenkbereich. Ein Trum ist dabei mit seinem Endbereich, z.B. mittels besonderer Endanschlussteile, an einem Mitnehmer einer relativbeweglichen Anschlussstelle befestigt ist.

Ein erfindungsgemäß hybrid aufgebauter Längsabschnitt, in welchem aufeinanderfolgende Kettenlaschen mit Durchbrüchen im ersten und im zweiten Überlappungsbereich ausgeführt sind und jeweils ein Seitenteil zu jeder zweiten Kettenlasche zugeordnet ist soll sich vorzugsweise ausgehend vom Endbereich am Mitnehmer über mindestens ein Drittel der Gesamtlänge der Energieführungskette erstecken. In diesem Bereich sind die Kräfte bzw. Belastungen, insbesondere bei bestimmungsgemäß freitragendem Trum, im ausgefahrenen Zustand am höchsten bzw. am kritischsten.

Alternativ zu einer nur entlang eines Anteils der Länge der Energieführungskette erfindungsgemäßen Gestaltung können beide Laschenstränge selbstverständlich zur Vereinfachung zwischen ihren Endbereichen durchgehend bzw. vorzugsweise über im Wesentlichen die gesamte Länge (Endbereiche bzw. Anschlussteile ausgenommen) aus Kettenlaschen und Seitenteilen im Sinne der Erfindung bestehen. Dabei sind alle Kettenlaschen und Seitenteile vorzugsweise baugleich.

Die Erfindung betrifft ferner auch ein einzelnes Kettenglied für eine Energieführungskette, das zwei gegenüberliegende Kettenlaschen aus Metallblech mit Durchbrüchen im ersten Überlappungsbereich und Durchbrüchen im zweiten Überlappungsbereich aufweist. Erfindungsgemäß ist seitlich zu jeder der gegenüberliegenden Kettenlasche ein Seitenteil aus Kunststoff vorgesehen, das jeweils zwei Endbereiche mit mindestens einem männlichen Vorsprung aufweist, welcher durch einen weiblichen Durchbruch der Kettenlasche greift, zwecks Schenkwinkelbegrenzung und/oder Gelenkverbindung. Vorzugsweise sind am Seitenteil dabei in jedem seiner beiden Endbereiche eine Anzahl männliche Elemente bzw. Vorsprünge vorgesehen, die der Anzahl von Durchbrüchen bzw. weiblichen Aufnahmen pro Überlappungsbereich der Kettenlasche entsprechen, sodass je ein Vorsprung jedes Endbereichs durch einen zugehörigen Durchbruch im Überlappungsbereich der zugeordneten Kettenlasche greift.

Ein derartiges hybrides Kettenglied kann dann beidseitig durch lediglich jeweils zwei einzelne Kettenlaschen (ohne Seitenteil) mit einem weiteren derartigen hybriden Kettenglied verbunden werden, d.h. nur jedes zweite Kettenglied hat dabei die vorgeschlagenen Seitenteile. Dieses Kettenglied kann ansonsten eines oder mehrere der vorstehend beschriebenen Merkmale aufweisen.

Als ein Kerngedanke des ersten Aspekts der Erfindung lässt sich somit festhalten, dass ein Seitenteil aus Kunststoff in beiden Endbereichen einen oder mehrere männliche Verbinder-Elemente bzw. Vorsprünge aufweist welche, jeweils an beiden Überlappungsbereichen einer zugeordneten Kettenlasche, durch die Durchbrüche bzw. weiblichen Aufnahmen sowohl der zugeordneten als auch durch diejenigen einer darauffolgenden Kettenlasche greift um diese Laschen miteinander zu verbinden.

Somit kann ein Seitenteil insgesamt drei aufeinanderfolgende Laschen miteinander verbinden. Dabei kann das Seitenteil durch sich überlappende Überlappungsbereiche von zwei aufeinander folgenden Kettenlaschen greifen, um diese Kettenlaschen gelenkig zu verbinden und/oder deren Schwenkwinkel zu begrenzen. Dies erlaubt eine besonders einfach zu montierende, materialsparende und ggf. bauteilreduzierte Bauweise bei hoher mechanischer Festigkeit der Kettenlaschen, d.h. großen freitragenden Längen.

Es kann also insbesondere jedes Seitenteil zum Bilden von zwei Gelenkverbindungen dienen bzw. zusammen mit den entsprechenden Kettenlaschen zwei Gelenkverbindungen zwischen diesen bilden. Der eine Endbereich des Seitenteils kann dabei den Vorsprung bzw. die Vorsprünge für eine erste Gelenkverbindung aufweisen, und der andere Endbereich des Seitenteils den bzw.die Vorsprünge für eine weitere zweite Gelenkverbindung aufweisen. Jeder dieser Gelenkverbindungen kann dabei durch Zusammenwirken von drei Bereichen gebildet sein: einem Endbereich des Seitenteils mit Vorsprüngen, einem Überlappungsbereich mit Durchbrüchen einer ersten Kettenlasche bzw. der Kettenlasche, zu welcher das Seitenteil zugeordnet ist, und einem Überlappungsbereich mit Durchbrüchen einer zweiten Kettenlasche, wobei die Vorsprünge jeweils durch die Durchbrüche beider Kettenlaschen hindurch reichen. Jeweils genau ein Seitenteil ist somit bevorzugt jeder zweiten Kettenlasche zugeordnet, wobei dieses eine Seitenteil Bestandteil beider Gelenkverbindungen ist, mit welchen die zugeordnete Kettenlasche mit zwei benachbarten Kettenlaschen gelenkig verbunden ist.

### ZWEITER ASPEKT (SICHERUNGS-TRENNSTEG)

Gemäß dem vom o.g. ersten Aspekt unabhängigen zweiten Aspekt wird ein Trennsteg vorgeschlagen, der geeignet ist, ein ungewolltes Lösen bzw. Abtrennen von zwei gegenüberliegenden Querstegen bzw. Traversen eines Kettenglieds zu vermeiden. Dieser Trennsteg ist insbesondere aber nicht ausschließlich in einer Energieführungskette gemäß dem ersten Aspekt vorteilhaft einsetzbar.

Herkömmliche Trennstege dienen zur Innenraumaufteilung von Kettengliedern. Sie haben meistens an beiden Endseiten jeweils einen Befestigungsbereich zum Befestigen an einem Quersteg eines Kettenglieds und eine in einer Hauptebene erstreckten plattenartige Gestalt. Als Befestigungsbereich wird bei bekannten Trennstegen zumindest an einer Seite typisch eine von Hand herstellbare bzw. von Hand lösbare Rastverbindung zum Befestigen des Trennstegs am Quersteg vorgesehen. Bekannte Rastverbindungen sind jedoch nicht ausreichend fest für eine dauerhafte Sicherung gegen ungewolltes Lösen der Querstege.

DE 20 2015 101 707 U1 der Anmelderin beschreibt einen mehrteiligen Trennsteg zum Befestigen zwischen zwei Querstegen. Die Teile des Trennstegs nach DE 20 2015 101 707 U1 sind in der Höhenrichtung ineinander einsteckbar. Um die Teile voneinander zu trennen, muss ein Quersteg geöffnet bzw. entfernt werden. KR 20 0 293 663 Y1 beschreibt einen zweiteiligen Trennsteg, wobei jeder der beiden Teile sich von einem bis zum anderen Quersteg erstreckt. Jeder Teil bildet eine Hälfte des einen und eine Hälfte des anderen Befestigungsbereichs für den jeweiligen Quersteg.

Gemäß dem zweiten Aspekt soll ein Trennsteg vorgeschlagen werden, welcher eine zur Sicherung geeignete, festere Verbindung mit beidseitig angrenzenden Querstegen ermöglicht. Dies wird gemäß dem zweiten Aspekt bereits dadurch erreicht, dass der Trennsteg zweiteilig ausgeführt ist mit einem ersten Teil, welcher mindestens einen senkrecht zur Hauptebene vorstehenden Sicherungszapfen umfasst, und einem zweiten Teil, welcher mindestens einen senkrecht zur Hauptebene vertiefte Sicherungsaufnahme umfasst, sodass die beiden Teile in Richtung senkrecht zu ihrer Hauptebene verbindbar bzw. lösbar sind.

Die vorgeschlagene Teilbarkeit des Trennsteg in zwei Teile senkrecht zur Längsrichtung der Energieführungskette bzw. zur Hauptebene des Trennsteg ermöglicht eine festere, nur schwer oder im Betrieb nicht lösbare Befestigung am Quersteg. Querstege werden typischerweise etwa in Richtung der Bauhöhe des Kettenglieds und etwa senkrecht mit den Kettenlaschen bzw. Seitenteilen verbunden, z.B. durch Verrasten. Dank der Bauweise gemäß dem zweiten Aspekt, kann eine gegen Lösen in diese Richtung zuverlässig sichernde Verbindung zwischen Trennsteg und Quersteg vorgesehen werden, indem ein Abtrennen bzw. Entfernen des Querstegs erst ermöglicht wird, nachdem zuerst der zweiteilige Trennsteg in seitlicher Richtung (senkrecht zur Längsrichtung bzw. zur Verbindungsrichtung des Querstegs) geöffnet bzw. aufgetrennt wird. So kann eine zuverlässige Sicherung erreicht werden, die im Betrieb nicht ungewollt lösen kann, da zunächst ein Trennen der beiden Teile des Trennsteg erforderlich ist. So kann der Trennsteg zusätzlich zur üblichen Funktion der inneren Raumaufteilung als mechanische Sicherung zum Sichern der Querstege am Kettenglied genutzt werden.

In bevorzugter Ausführungsform des zweiteiligen Trennsteg sind beide Teile als Gleichteile und/oder jeweils einteilig ausgeführt.

Dabei kann jeder Teil, jeweils mit einem Befestigungsbereich und einem Körper ausgeführt sein, welcher einerseits einen Sicherungszapfen und andererseits eine Sicherungsaufnahme aufweist. Der Sicherungszapfen ist vorzugsweise an einem vom Befestigungsbereich abgewandten Endbereich des Körpers angeordnet.

Somit können im verbundenen Zustand des Trennsteg jeweils zwei Sicherungszapfen in einer entsprechenden Sicherungsaufnahme festgelegt werden. Jedes der beiden Teile kann insbesondere genau einen Befestigungsbereich aufweisen. Vorzugsweise ist jeder Befestigungsbereich einteilig ausgeführt. Diese Variante ist besonders stabil.

Eine besonders zuverlässige Sicherung gegen ungewolltes Lösen der Querstege wird erzielt, wenn jeder Befestigungsbereich einen zumindest überwiegend, vorzugsweise vollständig umlaufenden Rahmen mit einer Öffnung aufweist, durch welche ein Quersteg senkrecht zur Hauptebene einführbar ist.

Zur zusätzlichen Sicherung gegen ungewolltes Trennen der beiden Teile des Trennstegs kann jeder Teil an einem dem Befestigungsbereich gegenüberliegenden Endbereich mindestens einen in der Hauptebene, insbesondere in Längsrichtung der Energieführungskette, vorstehenden Fortsatz aufweisen. Ein solcher Fortsatz ermöglicht es, die Trennstegteile in Richtung senkrecht zur Hauptebene anhand der Fortsätze aneinander zu sichern, insbesondere durch eine Schraubverbindung, einen Sicherungsstift oder dgl. Ein Vorteil dieser Gestaltung liegt darin, dass die Zusatzsicherung an den Fortsätzen von außerhalb des Kettenglieds und auch bei eingelegten Leitungen gut zugänglich ist.

Alternativ oder ergänzend kann zur zuverlässigen Verbindung der beiden Teile des Trennstegs vorgesehen sein, dass der Sicherungszapfen mit der Sicherungsaufnahme verrastbar ist. Dies kann beispielsweise durch Zusammenwirkung einer Rastaussparung und einer Rastzunge oder einer sonstigen geeigneten Rast- oder Schnappverbindung erzielt werden.

Weitere Merkmale und Vorteile der Erfindung sind ohne Beschränkung des Schutzumfangs der nachfolgenden, ausführlicheren Beschreibung bevorzugter Ausführungsbeispiele anhand der beiliegenden Figuren zu entnehmen. Hierbei zeigen rein beispielhaft zum ersten Aspekt:
**FIG.1A-1B****:** einen gestreckten Längsabschnitt einer erfindungsgemäßen hybride Energieführungskette gemäß einem ersten Ausführungsbeispiel, in zusammengesetztem Zustand (FIG.1A) und teilweise explodierter Darstellung (FIG.1B);
**FIG.2A-2D****:** eine Kettenlasche mit hoher Festigkeit, gemäß dem ersten Ausführungsbeispiel, in perspektivischer Ansicht (FIG.2A), in Seitenansicht von Innen (FIG.2B), in Draufsicht (FIG.2C) und in Seitenansicht von außen (FIG.2D);
**FIG.3A-3D****:** ein Seitenteil aus Kunststoff gemäß dem ersten Ausführungsbeispiel, in perspektivischer Ansicht (FIG.3A), in Seitenansicht von Innen (FIG.3B), in Draufsicht (FIG.3C) und in Seitenansicht von außen (FIG.3D);
**FIG.4A-4C****:** eine erste Variante zur Kettenlasche nach FIG.2A-2D in perspektivischer Ansicht von Innen (FIG.4A), in Frontansicht (FIG.4B) und in perspektivischer Ansicht von außen (FIG.4C);
**FIG.5A-5C****:** eine zweite Variante zur Kettenlasche nach FIG.2A-2D in perspektivischer Ansicht von Innen (FIG.5A), in Frontansicht (FIG.5B) und in perspektivischer Ansicht von außen (FIG.5C);
**FIG.6A-6C****:** eine dritte Variante zur Kettenlasche nach FIG.2A-2D in perspektivischer Ansicht von Innen (FIG.6A), in Frontansicht (FIG.6B) und in perspektivischer Ansicht von außen (FIG.6C); und
**FIG.7A-7C****:** in perspektivischer Ansicht eine Kettenlasche bzw. ein Seitenteil gemäß einem weiteren Ausführungsbeispiel, einzeln von Innen (FIG.7A bzw. 7B), und als verbindbare Gruppe (FIG.7C);
Ferner zeigen rein beispielhaft zum unabhängigen zweiten Aspekt:
**FIG.8A****:** ein Kettenglied einer Energieführungskette mit einem Trennsteg nach einem ersten Ausführungsbeispiel;
**FIG.8B-8D****:** einen Trennsteg nach FIG.8A in Perspektivansicht (FIG.8B), in Schnittdarstellung des Trennstegs befestigt an zwei Querstegen (FIG.8C) und in Frontansicht des Trennstegs (FIG.8D);
**FIG.9A-9C****:** eine Perspektivansicht (FIG.9A) eines Trennstegs nach einem zweiten Ausführungsbeispiel, eine Schnittdarstellung dieses Trennstegs (FIG.9B) befestigt an zwei Querstegen, eine Detailansicht mit Sicherungszapfen in Schnittdarstellung (FIG.9C); und
**FIG.10****:** eine Perspektivansicht eines Trennstegs nach einem dritten Ausführungsbeispiel.

Als Variante zum ersten Aspekt wiederum zeigen:
**FIG.11A-11C****:** ein Seitenteil aus Kunststoff gemäß einem zweiten Ausführungsbeispiel, in Seitenansicht von Innen (FIG.11A), in perspektivischer Ansicht von innen (FIG.11B) und in vergrößertem Teil-Querschnitt (FIG.11C) nach Schnittlinie XIC-XIC aus FIG.11A;
**FIG.12A-12F****:** einen Teilabschnitt einer erfindungsgemäß hybriden Energieführungskette gemäß einem zweitem Ausführungsbeispiel, perspektivisch (FIG.12A), in vergrößerter Teilansicht hierzu (FIG.12B), einen Spezialverbinder für Querstege in Draufsicht (FIG.12C) und Seitenansicht (FIG.12D) sowie einen Quersteg dieser Energieführungskette in Draufsicht (FIG.12E) und Stirnansicht (FIG.12F).

### FIGURENBESCHREIBUNG ZUM ERSTEN ASPEKT

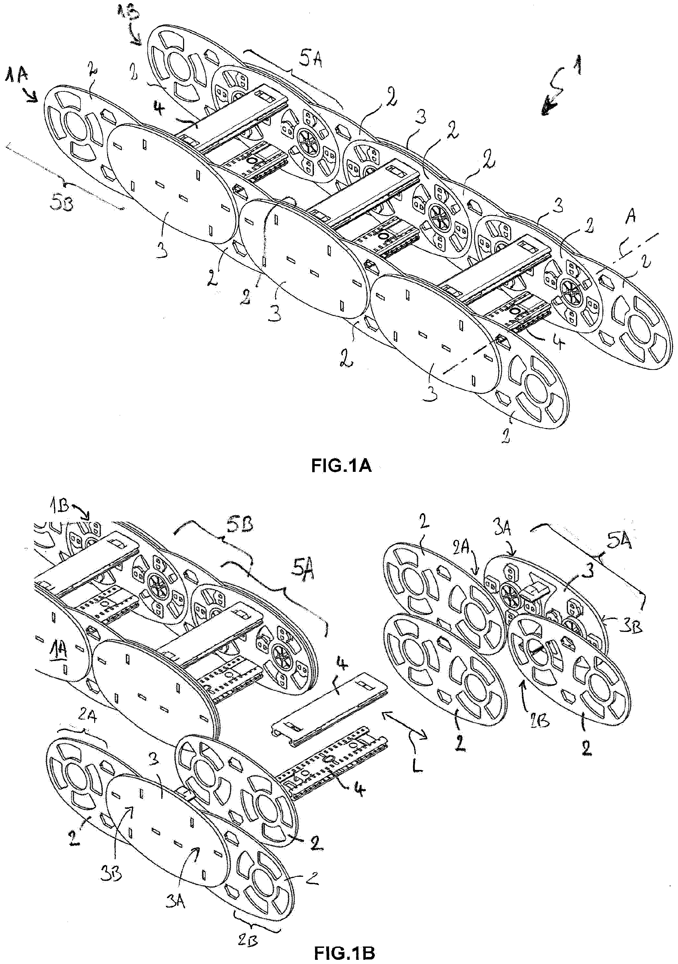

FIG.1A-1B zeigt einen Längsabschnitt einer Energieführungskette 1 mit zwei seitlich gegenüberliegenden Laschensträngen 1A, 1B. Jeder Laschenstrang 1A, 1B ist aus zwei Bauteilen aufgebaut, nämlich einer Kettenlasche 2 aus Metall, bspw. aus Stahlblech, und einem Seitenteil 3 aus Kunststoff, insbesondere in Spritzgusstechnik gefertigt. Die beiden Laschenstränge 1A, 1B sind parallel miteinander verbunden durch Paare von Querstegen 4 und definieren dazwischen einen Aufnahmeraum für Versorgungsleitungen (nicht gezeigt). Die beidseitig verwendbaren Querstege 4 sind vorzugsweise aus Kunststoff und bekannter Gestaltung, wie z.B. in DE 35 31 066 C2 oder US 4,813,224 A von der Anmelderin vorgeschlagen deren Lehre insoweit einbezogen wird.

Die Energieführungskette 1 ist halbstegig und mit abwechselnd unterschiedlich aufgebauten Kettengliedern 5A bzw. 5B ausgeführt, nämlich mit ersten hybriden Kettengliedern 5A, bestehend aus zwei Kettenlaschen 2, zwei Seitenteilen 3 und zwei Querstegen 4, und zweiten einfachen bzw. nicht hybriden Kettengliedern 5B bestehend aus lediglich zwei Kettenlaschen 2. Aufeinander folgende Kettenglieder 5A, 5B sind jeweils gelenkig miteinander verbunden, nämlich um jeweils eine Schwenkachs A zueinander schwenkbar, aus einer vorgespannten oder geraden Strecklage eines Trums, wie in z.T. in FIG.1A-1B dargestellt, in eine abgewinkelte Stellung zur Bildung eines Umlenkbogens (nicht gezeigt) mit definiertem Radius, und umgekehrt wenn die Energieführungskette 1 hin- und her bewegt wird. Die Energieführungskette 1 kann zwischen ihren Endanschlüssen (nicht gezeigt) durchgehend aus abwechselnden Kettengliedern 5A bzw. 5B gemäß FIG.1A-1B bestehen.

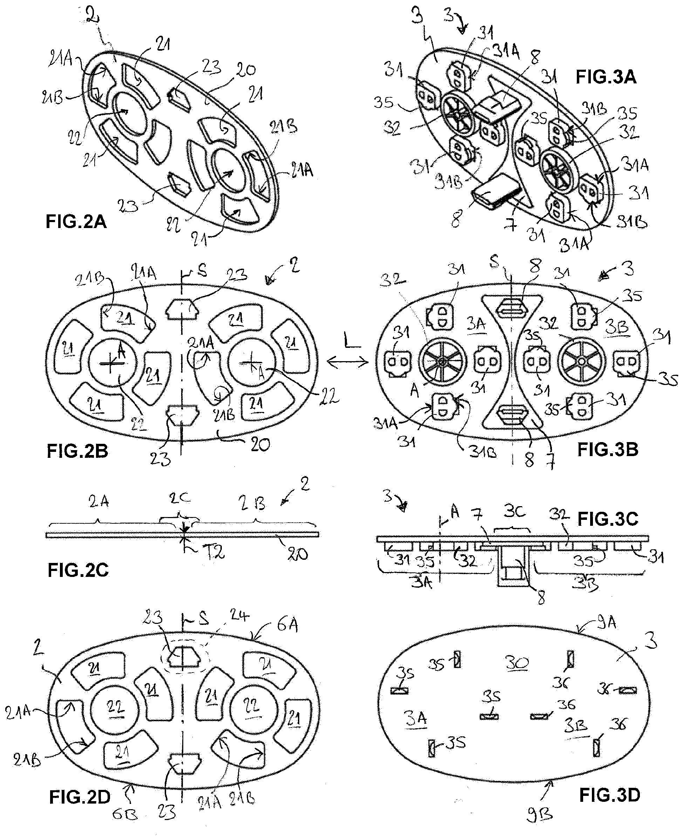

In jedem Laschenstrang 1A, 1B alternieren innere und äußere Kettenlaschen 2, sodass die Kettenlaschen 2 aus Metall jeweils paarweise überlappen, nämlich mit jeweils einem von zwei endseitigen Überlappungsbereichen 2A, 2B und dem jeweils gegenüberliegenden Überlappungsbereich 2A, 2B der angrenzenden Kettenlasche 2. Die Kettenlaschen 2 aus Metall sind demnach in beiden Laschensträngen 1A, 1B als alternierende Innenlaschen, hier in den hybriden Kettengliedern 5A, und Außenlaschen, hier in den einfachen Kettengliedern 5B, angeordnet. Die Kettenlaschen 2 sind dabei in allen Kettengliedern 5A, 5B baugleich, hier identische Gleichteile, wie in FIG.2A-2D im Einzelnen gezeigt.

Ein Seitenteil 3 aus Kunststoff ist hierbei nur jeder zweiten Kettenlasche 2 aus Metall zugeordnet, hier der innenliegenden Kettenlasche 2 in den Kettengliedern 5A. Die Kettenglieder 5A nutzen somit hybrid zwei Werkstoffe, Metall und Kunststoff. Auch die Seitenteile 3 sind baugleiche und materialeinheitlich hergestellte Gleichteile, insbesondere Spritzgussteile aus Kunststoff, und in FIG.3A-3D im Einzelnen gezeigt. Bei den gegenüberliegenden Kettenlaschen 2 eines hybriden Kettenglieds 5A ist jeweils ein spezielles Seitenteil 3 als Verbindungs-Formteil in den Kettengliedern 5A zugeordnet, und an der Außenseite angebracht (vgl. FIG.1B). In jedem Laschenstrang 1A, 1B sind die beiden angrenzenden metallischen Kettenlaschen 2 eines einfachen Kettenglieds 5B jeweils mit der Kettenlasche 2 eines hybriden Kettenglieds 5A durch ein solches Seitenteil 3 verbunden.

Hierzu haben die Kettenlaschen 2 in jedem Überlappungsbereich 2A, 2B, jeweils vier erste Durchbrüche 21, nachfolgend als Anschlag-Durchbruch 21 bezeichnet, die zur Schwenkwinkelbegrenzung dienen sowie jeweils einen zweiten Durchbruch 22, der zur gelenkigen Verbindung der Kettenlaschen 2, hier in Form einer Drehgelenkverbindung dient. Korrespondierend dazu hat das verbindende Kunststoffteil, d.h. das Seitenteil 3 in jedem seiner Endbereiche 3A, 3B jeweils vier erste Vorsprünge 31, nachfolgend als Anschlag-Vorsprung 31 bezeichnet, zum Durchgreifen der Anschlag-Durchbrüche 21 der Kettenlaschen 2. Weiterhin hat das Seitenteil 3 einen zweiten Vorsprung 32, zum Eingriff in den zweiten Durchbruch 22 von zwei zu verbindenden Kettenlaschen 2, der korrespondierend zum zweiten Durchbruch 22 gestaltet ist.

Alle Anschlag-Durchbrüche 21 haben identische Geometrie in Form eines Sektors einer Kreisscheibe in der Laschenebene vgl. FIG.2B bzw. FIG.2D. In jedem Überlappungsbereich 2A, 2B sind die Anschlag-Durchbrüche 21 jeweils um die dortige Schwenkachse A eines Kettenglieds 5A, 5B gleich verteilt. Das Bogenmaß der Durchbrüche 21 kann dabei entsprechend dem gewünschten Schwenkwinkel gewählt werden, ist jedoch spürbar kleiner als 360°/d, mit d der Anzahl Anschlag-Durchbrüche 21, hier d=4, sodass die stirnseitigen Enden der Kettenlasch 2 zugfest mit ihrem Mittelbereich 2C verbunden bleiben.

Die mit den Anschlag-Durchbrüchen 21 zusammenwirkenden Anschlag-Vorsprünge 31 des Seitenteils 3 sind, als blockförmige Elemente ebenfalls identisch geformt, hier mit einer etwa quaderförmigen bzw. rechteckigen Grundfläche, vgl. FIG.3B. Jeder Anschlag-Vorsprung 31 hat zwei voneinander abgewandte Anschlagflächen 31A, 31B an seinen langen Seiten. Diese Anschlagflächen 31A, 31B dienen zur Schwenkwinkelbegrenzung durch Anschlag mit jeweils einem von zwei gerade bzw. linear erstreckten Endbereichen 21A, 21B an Stirnende jedes bogenförmigen Anschlag-Durchbruchs 21. Die Endbereiche 21A, 21B verlaufen hier parallel zu einem Radius der Schwenkachse A, jedoch um etwa den halben Abstand zwischen zwei Anschlagflächen 31A, 31B zum Radius versetzt, vgl. FIG.2B.

Wie FIG.2B-3B bzw. FIG.2D-3D zeigen haben die Kettenglieder 2 und die Seitenlaschen 3 jeweils Grundkörper 20 bzw. 30 mit deckungsgleichen Außenkonturen in Seitenansicht, hier oval bzw. etwa elliptisch mit der langen Achse in Längsrichtung L der Kettenglieder (=Verbindungslinie zwischen den Schwenkachsen A-A einer Kettenlasche 2). Wie FIG.2C veranschaulicht ist der Grundkörper 20 bzw. die Kettenasche 2 jeweils als ebenes Bauteil ohne Kröpfung bzw. Versprung an beiden Hauptseiten ausgeführt. Die Kettenlaschen 2 haben eine über die gesamte Fläche konstante Laschendicke T2. Wie FIG.3C zeigt, hat das Seitenteile 3 nur an einer Hauptseite, die montiert der Innenseite des hybriden Kettenglieds 5A zugewandt ist, jeweils Vorsprünge 31, 32 und sind an der anderen Hauptseite bzw. Außenseite eben bzw. vorsprungfrei ausgeführt.

Wie am besten Aus FIG.1B ersichtlich, ist nur jeder zweiten Kettenlasche 2, d.h. in den Kettengliedern 5A, ein Seitenteil 3 mit vorstehenden Vorsprüngen 31, 32 zugeordnet. In Strecklage stehen die Endbereiche 21B in dem einen Überlappungsbereich 2A der zugeordneten Kettenlasche 2 mit den Anschlag-Vorsprüngen 31, nämlich deren Anschlagflächen 31B, im Anschlag. Im anderen Überlappungsbereich 2B dieser Kettenlasche 2 hingegen stehen die jeweils anderen Endbereiche 21A der Anschlag-Durchbrüche 21 mit der jeweils anderen Anschlagfläche 31A der Anschlag-Vorsprünge 31 im Anschlag. Für die benachbarten Kettenlaschen 2 sind es jeweils umgekehrt die gegenüberliegenden Endbereiche 21A bzw. 21B die mit der entsprechenden Anschlagfläche 31A bzw. 31B im Anschlag stehen. Wie aus FIG.1A ersichtlich, werden so die Vorsprünge 31 zwischen den jeweils sich gegenüberliegenden Endbereichen 21A, 21B der Kettenlaschen eingeklemmt. So wird die Begrenzung der relativen Schwenkstellung einerseits in Strecklage (FIG.1A) und entsprechend andererseits auch, durch die jeweils umgekehrten Endbereiche 21A bzw. 21B, in der vollständig abgewinkelten Stellung (nicht gezeigt) erreicht. Der Kunststoff der Anschlag-Vorsprünge 31 kann entsprechende Druckbelastungen gut auffangen. Zum Auffangen der Scherwirkung zwischen zwei gegenüberliegenden Endbereichen 21A bzw. 21B sind die Anschlag-Vorsprünge 31 mindestens bereichsweise durchgehend aus Vollmaterial zwischen den Anschlagflächen 31A bzw. 31B ausgeführt, in FIG.3A-3D z.B. mit drei Vollbereichen, und mit einem Abstand zwischen den Anschlagflächen 31A bzw. 31B dimensioniert der eine Mehrfaches der Laschendicke T2 der Kettenlaschen beträgt, z.B. um einen Faktor von mindestens 5.

Somit sind zur Verbindung an den Kettenlaschen 2 lediglich Durchbrüche 21, 22 (weibliche Verbinder) in beiden Überlappungsbereichen 2A, 2B und an den Seitenteilen 3 lediglich Vorsprünge 31, 32 (männliche Verbinder) vorgesehen. Die Kettenlaschen 2 nach FIG.2A-2D können somit günstig als einfache, Blechteile, z.B. durch Ausstanzen oder Schneidbearbeitung, hergestellt werden ggf. ohne weitere Bearbeitungs- oder Umformschritte. Die Kettenlaschen 2 haben mit einen ebenen, beidseitig flachen monolithischen Grundkörper 20. Die Seitenteile 3 sind einstückig, mit dem Hauptkörper 30 und allen Vorsprüngen, insbesondere den Vorsprünge 31, 32 aus einem Kunststoffteil hergestellt. Die Kettenlaschen 2 und die Seitenteile 3 sind jeweils zu einer mittleren Symmetrieachse S, senkrecht zur Längsrichtung L, symmetrisch ausgeführt. Somit sind identische Kettenlaschen 2 und Seitenteile 3 beidseitig in jedem Laschenstrang 1A, 1B verwendbar.

Zur stabilen Drehgelenk-Verbindung und Zug-/Schubkraftübertragung hat das Seitenteil 3 in jedem Endbereich 3A, 3B jeweils einen Gelenk-Vorsprung 32 mit kreiszylindrischer Außenwand, welche die Schwenkachse A definiert. Der Gelenk-Vorsprung 32 kann gemäß FIG.3A-3B z.B. als Ring mit Verstärkungsnaben ausgeführt sein, zur Materialeinsparung. Jeder Gelenk-Vorsprung 32 greift durch und lagert jeweils einen koaxialen, kreisförmigen Durchbruch 22 im seitlich überlappenden Überlappungsbereich 2A, 2B der zugeordneten Kettenlasche 2 und der diese dort jeweils überlappenden angrenzenden Kettenlasche 2, vgl. FIG.1B. So wird trotz einfachster Bauweise der Kettenlaschen 2 eine robuste Drehgelenkverbindung aufeinanderfolgender Kettenlaschen 2 um die Schwenkachsen A erzielt. Wie ein Vergleich der FIG.1A mit FIG.3B zeigt, greifen in jeden Überlappungsbereich 2A, 2B der Kettenlaschen auf der langen Mittelachse in Längsrichtung L jeweils drei Vorsprünge, nämlich zwei Anschlagvorsprünge 31 und ein Gelenkvorsprung 32, in die entsprechenden Durchbrüche 21, 22 sodass trotz materialsparender Bauweise der Seitenteile 3 beim Verfahren der Energieführungskette 1 große Zug- und Schubkräfte von der einen Kettenlasche 2 durch die Vorsprünge 21, 22 unmittelbar auf die folgende Kettenlasche 2 übertragen werden können. Zug- und Schubkräfte können dabei z.T. die Anschlagvorsprünge 31, oder bei geeignet eingestelltem Spiel, ausschließlich die Gelenk-Vorsprüngen 32 der Seitenteile 3 zwischen den Durchbrüchen 22 bzw. den Kettenlaschen 2 übertragen. Dementsprechend müssen nur diese Vorsprünge 31 bzw. 32 aus Kunststoff entsprechend ausreichend fest gestaltet und dimensioniert sein. Ein Kraftfluss über den Grundkörper 30 der Seitenteile 3 erfolgt jedenfalls nicht, sodass der Grundkörper 30 vergleichsweise dünnwandig ausgeführt ist.

Zur Befestigung von jeweils zwei Seitenteilen 3 und von dieser überlappten zwei zugeordneten Kettenlaschen 2 zu einem hybriden Kettenglied 5A, werden die Querstege 4 jeweils endseitig mit einem von zwei gegenüberliegenden Befestigungszapfen 8 im Mittelbereich 3C der Seitenteile 3 verbunden. Jeder Befestigungszapfen 8 ist einteilig mit dem Grundkörper 30 gefertigt und steht, wie die Vorsprünge 31, 32 innenseitig davon hervor. Der Grundkörper 30 hat zur Versteifung im mittleren Bereich 3C zwischen den Endbereichen 3A, 3B eine Materialverdickung 7, an welcher die Befestigungszapfen 8 jeweils materialeinheitlich vorgesehen sind. Die Materialverdickung 7 im Mittelbereich 3C kann mit einer Stärke von etwa der Laschendicke T2 der Kettenlaschen 2, vorzugsweise leicht größer, vorstehen und ist stirnseitig entsprechend deren Kontur geformt. Jeder Befestigungszapfen 8 ist nahe einer der beiden langen Schmalseiten 9A, 9B des Seitenteils 3 vorgesehen, die etwa in Längsrichtung L liegen.

Die Befestigungszapfen 8 haben einen etwa sechskantigen Querschnitt und eine vorstehende Quernase, welche in eine Aufnahme des Querstegs 4 eingreift zur Verriegelung senkrecht zur Hauptebene der Seitenteile 3. Die Querstege 4 werden etwa senkrecht zu den Schwenkachsen A und der Längsrichtung L auf die Befestigungszapfen montiert. Dazu haben die Querstegs 4 endseitige Aufnahmen zur stabilen Schnappverbindung mit den Befestigungszapfen 8, wie in DE 35 31 066 C2 beschrieben, mit dem Unterschied, dass der Befestigungszapfen 8 um etwa die doppelte Laschendicke T2 der Kettenlaschen 2 weiter hervorsteht. Die Befestigungszapfen 8 greifen nämlich durch eine weitere Aussparung 23 an jeder Schmalseite 6A, 6B der zugeordneten Kettenlasche 2 hindurch. Zwischen jedem Überlappungsbereich 2A, 2B der zugeordneten Kettenlasche 2 und dem Seitenteil 3 ist jeweils auch eine angrenzende Kettenlaschen 2 gehalten, vgl. FIG.1A-1B. Die Sicherung der Kettenlaschen 2 aneinander senkrecht zur Längsrichtung L bzw. ihrer Hauptebene S-L kann wird dabei durch die Querstege 4 erzielt, welche jeweils endseitig mit ihren flachen Stirnseiten am Rand 24 um die Aussparung 23 der zugeordneten Kettenlasche 2 anliegen, um diese Kettenlasche 2 in seitlicher Richtung nach innen am Seitenteil 3 zu halten. Zwischen den gegenüberliegenden Überlappungsbereichen 2A, 2B dieser Kettenlasche 2 und den Endbereichen 3A, 3B des Seitenteils 3 sind zugleich die angrenzenden Kettenlaschen 2 der nicht-hybriden Kettenglieder 5B gehalten. Das Anbringen von zwei Querstegen 4 montiert mit dem Kettenglied 5A somit zugleich jeweils drei Kettenlaschen 2 quer zur Längsrichtung L aneinander, vgl. FIG.1B. Im montierten Zustand wird die zugeordnete Kettenlasche 2 durch geeignete Dimensionierung der Befestigungszapfen 8 zwischen den Querstegen und der Materialverdickung 7 des Seitenteils 3 eingespannt, d.h. die Außenseite der Kettenlasche 2 wird gegen die flache Innenseite der Materialverdickung 7 gespannt.

Zur zusätzlichen Sicherung gegen Aufbiegen der Endbereiche 3A, 3B in den einfachen Kettenlaschen 5B haben alle Anschlag-Vorsprünge 31 jeweils einen Querfortsatz 35, welche von der jeweils angrenzenden Kettenlasche 2, genauer dem Rand des Grundkörpers 20 am jeweiligen Endbereich 21A, 21B, hinter griffen wird. Wie in FIG.1A zu erkennen erfolgt dieser Hintergriff der Querfortsätze 35 an den Anschlag-Vorsprünge 31 zur Seitenstabilisierung hier lediglich in der kritischeren Strecklage der Laschenstränge 1A, 1B, d.h. insbesondere im freitragenden Obertrum wenn die Kettenglieder 5A, 5B nicht abgewinkelt sind. Die Querfortsätze 35 können jede geeignete Gestalt haben, hier z.B. als halbkreisförmige Zungen in Seitenansicht (FIG.3A-3B) die vom Ende der blockartigen Anschlag-Vorsprünge 31 parallel zur Hauptebene L-S des Seitenteils 3 hervorstehen. Der Abstand zwischen den Querfortsätzen 35 und dem Grundkörper 30 ist leicht grösser als die Laschendicke T2 der Kettenlaschen 2. Zur Vereinfachung des Formwerkzeugs, das zur Herstellung der Seitenteile 3 in Spritzgusstechnik verwendet wird, kann zu jedem Querfortsatz 35 im Laschenkörper 30 eine Fertigungsaussparung 36 vorgesehen werden, sodass kein Schieber im Formwerkzeug benötigt wird.

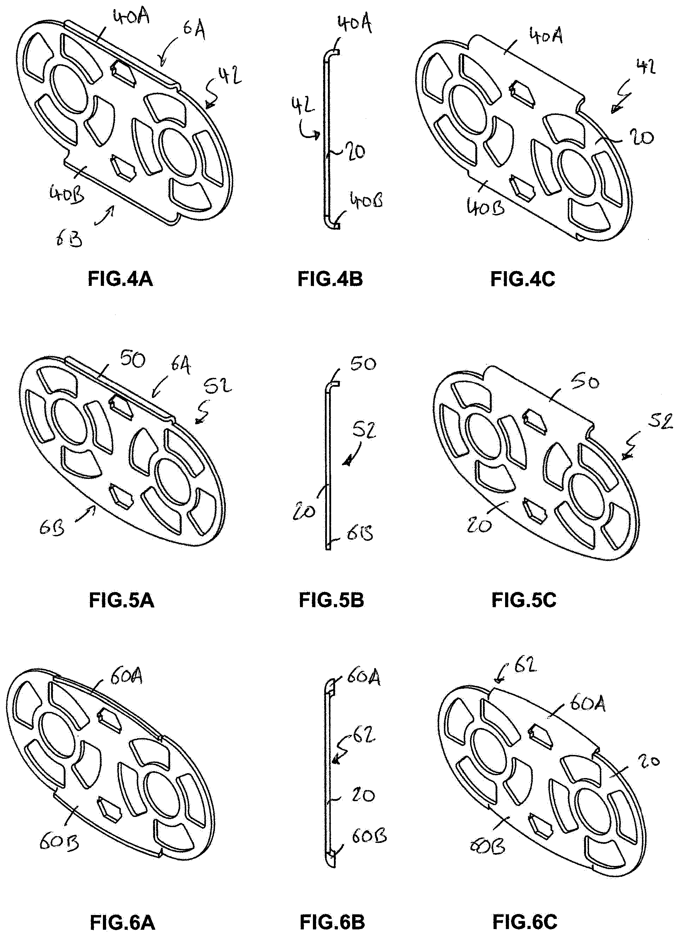

FIG.4A-6C zeigen Varianten zur metallischen Kettenlasche 2 aus FIG.2A-2D für den Aufbau hybrider Kettenglieder 5A in Verbindung mit Seitenteilen 3. Es werden nachfolgend nur die Unterschiede beschrieben, sonstige Merkmale der Kettenlaschen 42; 52; 62 sind identisch wie zu FIG.2A-2D beschrieben.

In FIG.4A-4C hat die Kettenlasche 42 an beiden Schmalseiten 6A, 6B jeweils einen endseitigen Versteifungsbereich 40A, 40B zur Versteifung des Grundkörpers 20 gegen ungewollte Verformung, insbesondere bei sehr großen freitragenden Längen. Die Versteifungsbereiche 40A, 40B verlaufen etwa linear in Längsrichtung L und sind im Querschnitt etwa entsprechend einem viertelkreisbogen gekrümmt, d.h. können durch Bördeln vorstehender Endlaschen aus dem ansonsten flachen Grundkörper 20 umgeformt werden. Die Länge der Versteifungsbereiche 40A, 40B reicht hier etwas über die Kettenteilung, d.h. den Abstand zwischen aufeinanderfolgenden Schwenkachsen A hinaus. Kettenlaschen 42 mit Versteifungsbereich 40A, 40B an jeder Schmalseiten 6A, 6B können ggf. für unterschiedliche Vorspannungen 180° um ihre Längsachse gedreht verwendet werden.

In FIG.5A-5C hat die Kettenlasche 52 nur an einer Schmalseite 6A, nämlich der im freitragenden Trum obenliegenden Schmalseite, jeweils einen Versteifungsbereich 50, entsprechend der Formgebung aus FIG.4A-4C. Die andere Schmalseite 6B ist hingegen oval gekrümmt und planeben mit dem Grundkörper 20, wie in FIG.2A-2D.

In FIG.6A-6C hat die Kettenlasche 62 wiederum an beiden Schmalseiten 6A, 6B jeweils einen endseitigen Versteifungsbereich 60A, 60B zur Versteifung des Grundkörpers 20 gegen ungewollte Verformung. Hierbei ist der Querschnitt wie in FIG.4C, jedoch der Verlauf in Längsrichtung L leicht gekrümmt, passender zur ovalen Kontur der Seitenteile 3. Die an der Schmalseite 6A, 6B jeweils vorstehende Lasche kann ggf. an ihren Enden leicht eingeschnitten werden um beim Verformen den Grundkörper 20 nicht zu beeinträchtigen, wie in FIG.6A/6C zu sehen. Kettenlaschen 42; 52; 62 nach FIG.4A-6C erlauben eine weitere Steigerung der freitragenden Länge bei gleichbleibender Laschendicke T2. Sie werden mit den Versteifungsbereichen 40; 50; 60 alternierend voneinander wegweisend angeordnet, damit diese die Abwinkelung nicht beeinträchtigen.

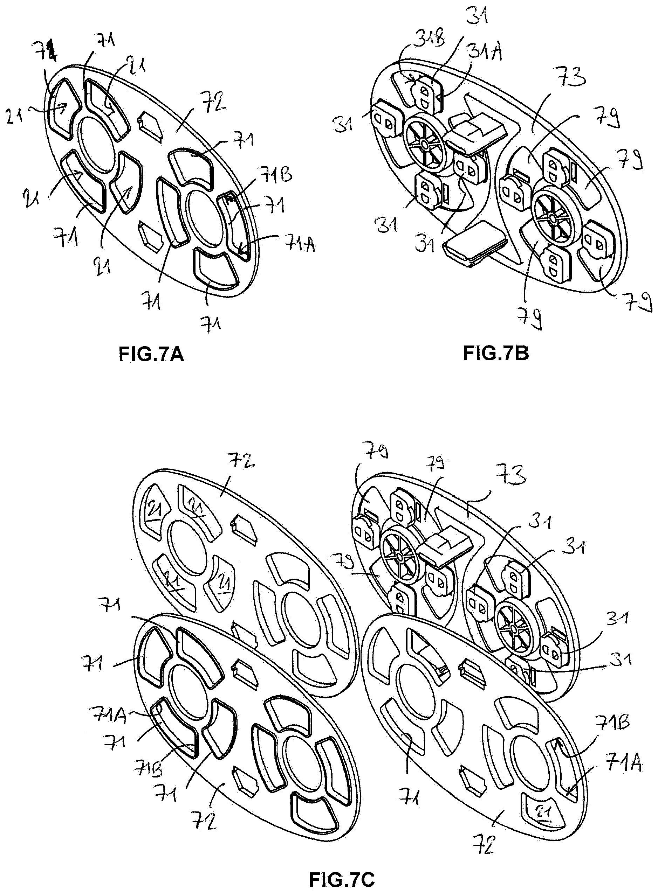

FIG.7A-7C zeigen eine weitere Variante zur metallischen Kettenlasche 2 aus FIG.2A-2D und eine Variante zum Seitenteil 3 aus FIG.3A-3D. Es werden nachfolgend nur die Unterschiede beschrieben, sonstige Merkmale sind identisch wie zu FIG.2A-2D bzw. FIG.3A-3D beschrieben.

Die Kettenlaschen 72 aus Metall nach FIG.7A/7C haben an allen Anschlagdurchbrüchen 21 jedes Überlappungsbereichs 2A, 2B jeweils umlaufende Randbereiche 71 die durch Metallumformen, z.B. tiefziehen oder bördeln, hergestellt sind. Diese Randbereiche 71 umfassen anschlagwirksam Endbereiche 71A, 71B mit im Vergleich zu FIG.2A-2D vergrößerter Anschlagfläche, die durch Umformen erzeugt wird. Somit kann die Flächenpressung auf Anschlagflächen 31A, 31B der Anschlagvorsprünge 31 am Seitenteil 73 aus Kunststoff jeweils besser verteilt werden. Durch das Umformen werden auch scharfe Kanten an den Durchbrüchen 21 inhärent vermieden. Zudem wirken umlaufende Randbereiche 71 als Versteifung der Kettenlasche 72.

Wie FIG.7C zeigt, werden die baugleichen Kettenlaschen 72 alternierend gedreht durch die Seitenteile 73 verkettet, mit den vorstehenden Randbereichen 71 nach innen gerichtet und nach Außen gerichtet wie in FIG.7C gezeigt. Dementsprechend sind im Seitenteil 73 für die Randbereiche 71 der überlappenden Kettenlaschen 72 bogenförmige Vertiefungen 79 vorgesehen. Der Überstand der Randbereiche 71 ist spürbar geringer als derjenige der Vorsprünge 31 des Seitenteils 73. Alle sonstigen Merkmale der Kettenlaschen 72 bzw. Seitenteile 72 entsprechen dem ersten Ausführungsbeispiel.

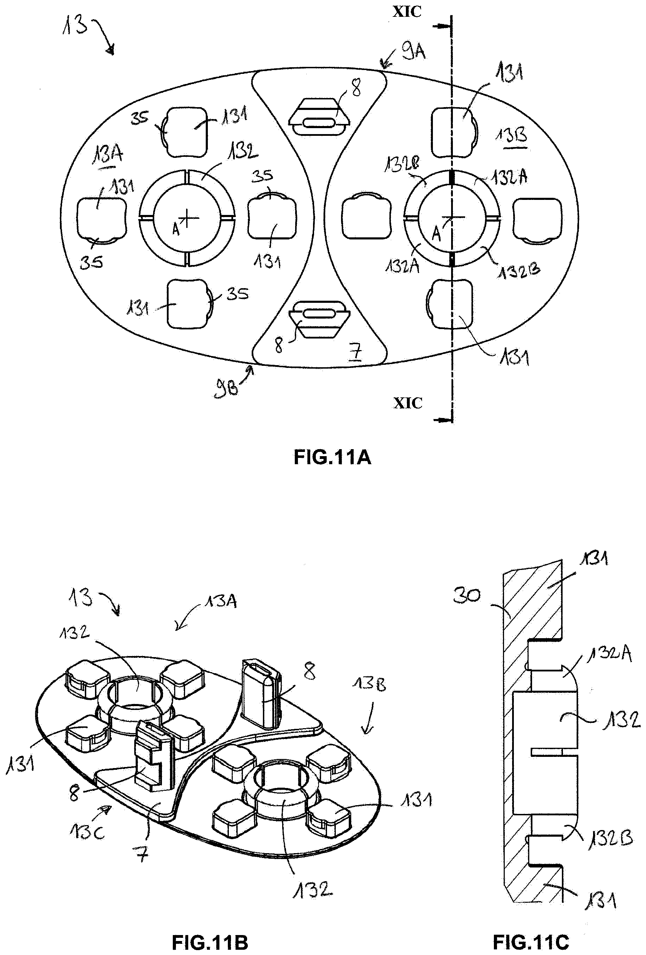

FIG.11A-11C zeigen eine Weiterbildung eines Seitenteils 13 zur Verwendung in einer hybriden Energieführungskette 1. Das Seitenteil 13 hat, entsprechend demjenigen aus FIG.3A-3D, auch hier einen Grundkörper 30 mit zwei Endbereichen 3A, 3B und dazwischen einen durch Materialverdickung 7 verstärkten Mittelbereich 13C, welcher nahe jeder Schmalseite 9A, 9B einen Befestigungszapfen 8 für einen Quersteg umfasst. In den Endbereichen 3A, 3B sind jeweils vier Anschlagvorsprünge 131 zum Eingreifen in entsprechende Durchbrüche 21 von zwei angrenzenden Kettenlaschen 2 vorgesehen, zwecks Begrenzung des Schwenkwinkels. Jeder Anschlagvorsprung 131 hat einen Querfortsatz 35 zur Seitenstabilität in Strecklage. Das Seitenteil 13 ist ebenfalls einstückig aus Kunststoff in Spritzgusstechnik hergestellt und zur Verbindung von zwei überlappenden Kettenlaschen 2 gemäß FIG.2A-2D bestimmt und verwendbar.

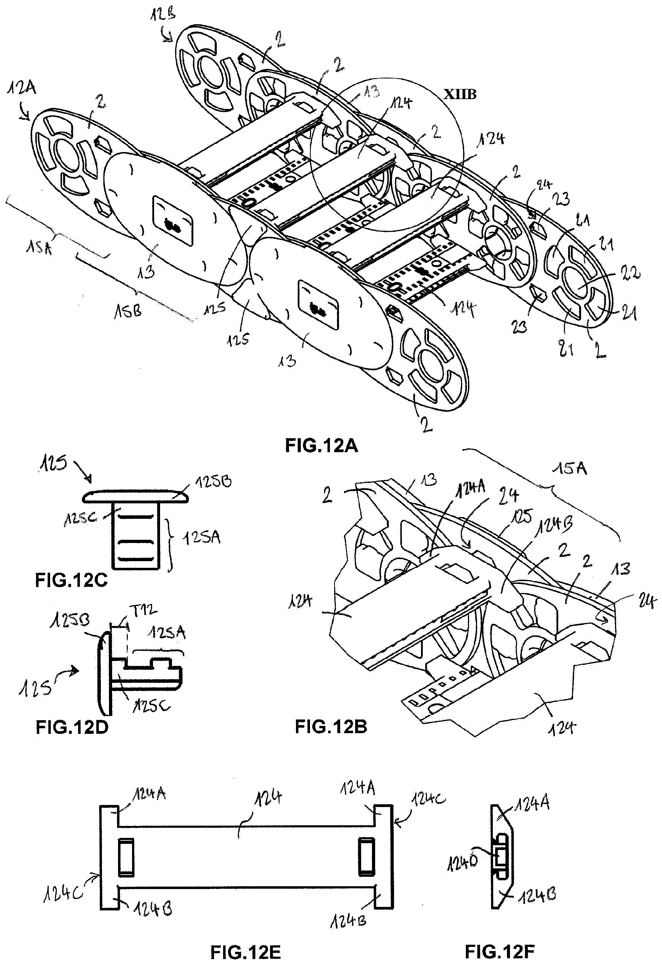

Nachfolgend wird der wesentliche Unterschied aus FIG.11A-11C gegenüber FIG.3A-3D erläutert. In FIG.11A-11C bildet jeder zapfenartige zweite Vorsprung 132 zur Gelenkverbindung zugleich einen rastenden Schnappverbinder zum Verrasten mit der Kettenlasche 2 (vgl. FIG.12A-12B), nämlich jeweils einem zweiten Durchbruch 22, der als Zapfenaufnahme bzw. Gelenkaufnahme dient. Das Seitenteil 13 steigert somit durch Rastverbindung an der Gelenkverbindung weiterhin die Seitenstabilität der Laschenstränge 1A, 1B bzw. Kettenglieder 5A, 5B, insbesondere in allen Winkelstellungen der Kettenlaschen 2 zueinander. Der Gelenk-Vorsprung 132 hat hierzu an der vorstehenden Innenseite mindestens zwei diametral gegenüberliegende Rastnasen 132A, 132B, mit entsprechenden Rastkanten, wie FIG.11C näher zeigt. Im Beispiel nach FIG.11A-11C bildet der Gelenk-Vorsprung 132 jeweils vier Rastnasen 132A, 132B in Form eines Viertelkreisbogens, die einteilig mit der kreisbogenförmigen Basis des Gelenk-Vorsprungs 132 geformt sind und symmetrisch um die Schwenkachse A verteilt sind. Alternativ hierzu können bspw. auch lediglich zwei Rastnasen bzw. Rasthaken, z.B. in Höhenrichtung (senkrecht zur Längsrichtung L), diametral zur Schwenkachse A gegenüberliegen, sodass in Längsrichtung L gerichteten Bereiche des Gelenk-Vorsprungs 132 biegefester ausgeführt werden können, ähnlich FIG.3A-3D. Gelenk-Vorsprünge 132 nach FIG.11A-11C die zugleich eine Rastfunktion haben, lassen sich günstig in Spritzgusstechnik fertigen.

FIG.12A-12F zeigen eine Weiterbildung einer Energieführungskette 12 mit zwei gegenüberliegenden Laschensträngen 12A, 12B. Jeder Laschenstrang 12A, 12B ist aus alternierenden einseitig überlappenden Kettenlaschen 2 gemäß FIG.2A-2D und mit Seitenteilen 13 gemäß FIG.11A-11C aufgebaut. Hierbei sind an sowohl an Kettengliedern 15B mit Seitenteilen 13, als auch an Kettengliedern 15A mit nur zwei Kettenlaschen 2 (ohne Seitenteile 13) jeweils zwei spezielle Querstege 124 vorgesehen, welche eine zusätzliche Seitenstabilisierung verwirklichen.

Wie aus FIG.12A-12B und FIG.12E-12F ersichtlich, haben die Querstege 124 hierbei an beiden Enden jeweils zwei gegenüberliegende in Längsrichtung L vorstehende Fortsätze bzw. Flügel 124A, 124B die symmetrisch zur Längsmittelebene des Querstegs 123 gestaltet sind. Die ebenen Außenflächen der Flügel 124A, 124B liegen bündig zum jeweiligen Stirnende des Querstegs 124. Wie aus FIG.12A und FIG.12B ersichtlich bilden die Flügel 124A, 124B mit ihren Außenflächen jeweils eine Stützfläche 124C, welche bei den einfachen Kettengliedern 15A jeweils die beiden angrenzenden Kettenlaschen 2 der benachbarten hybriden Kettenglieder 15B innenseitig überlappt und diese seitlich nach innen abstützt, d.h. die Seitenstabilität erhöht. Auch in den hybriden Kettengliedern 15B liegt der Randbereich 24 der Kettenlasche 2 um die Aussparungen 23 für die Befestigungszapfen 8 der Seitenteile 13 stabil an den Stützflächen 124C der Flügel 124A, 124B an, um die Seitenstabilität zu steigern. In den hybriden Kettengliedern 15B werden die Quersteg 124 an den Befestigungszapfen 8 der Seitenlaschen 13, welche jeweils die entsprechende Aussparung 23 der Kettenlasche 2 durchgreifen, befestigt.

Die Energieführungskette 12 aus FIG.12A-12F ist vollstegig ausgeführt, d.h. mit Querstegen 124 an den hybriden Kettengliedern 15B und auch an den nicht-hybriden Kettengliedern 15A (vgl. FIG.12B). Hierzu zeigen FIG.12C-12D einen Spezialverbinder 125 als Spritzguss-Formteil, mit welchem die Querstege 124 an den einzelnen Kettenlaschen 2 befestigt werden können. Der separate Spezialverbinder 125 hat ein Befestigungsende 125A, dessen Form, insbesondere Querschnitt, zur Verrastung mit einer Aufnahme 124D des Querstegs 124 in bekannter Weise baugleich zu den Befestigungszapfen 8 ist (vgl. FIG.11A bzw. FIG.3B). Gegenüberliegend bildet der Spezialverbinder 125 ein Stützende 125B mit vergrößertem Querschnitt, hier etwa in Dreiecksform, zur Anlage an der Außenseite der Kettenlasche 2, jeweils am äußeren Rand um die Aussparung 23. Zwischen Befestigungsende 125A und Stützende 125B ist ein Übergang 125C vorgesehen, dessen Querschnitt zwecks Verdrehsicherung konjugiert passend zu dem der Aussparung 23 in der Kettenlasche 2 ausgeführt ist und der eine Anlagekante für die Stirnseite des Quersteg 124 bildet. Die Abmessung T12 des Übergangs 125C senkrecht zur Laschenebene kann dabei geringfügig kleiner gewählt sein, als die Laschendicke T2 der Kettenlasche 2 um ein spielfreies Anliegen der Innenflächen benachbarter Kettenlaschen 2 an den Stützflächen 124C der Flügel 124A, 124B zu bewirken. Anhand der Spezialverbinder 125 kann ein vollstegige Energieführungskette 12 nach FIG.12A-12F ohne männliche Verbinderteile an den Kettenlaschen 2 realisiert werden.

Sonstige Merkmale und Eigenschaften der hybriden Energieführungskette 12 nach FIG.11A-12F entsprechen denjenigen der hybriden Energieführungskette 1 nach FIG.1A-3D.

Eine Energieführungskette bzw. ein Kettenglied gemäß einem der vorstehenden Ausführungsbeispiele kann vorteilhaft durch einen Trennsteg wie nachfolgend beschrieben ergänzt werden.

### FIGURENBESCHREIBUNG ZUM ZWEITEN ASPEKT

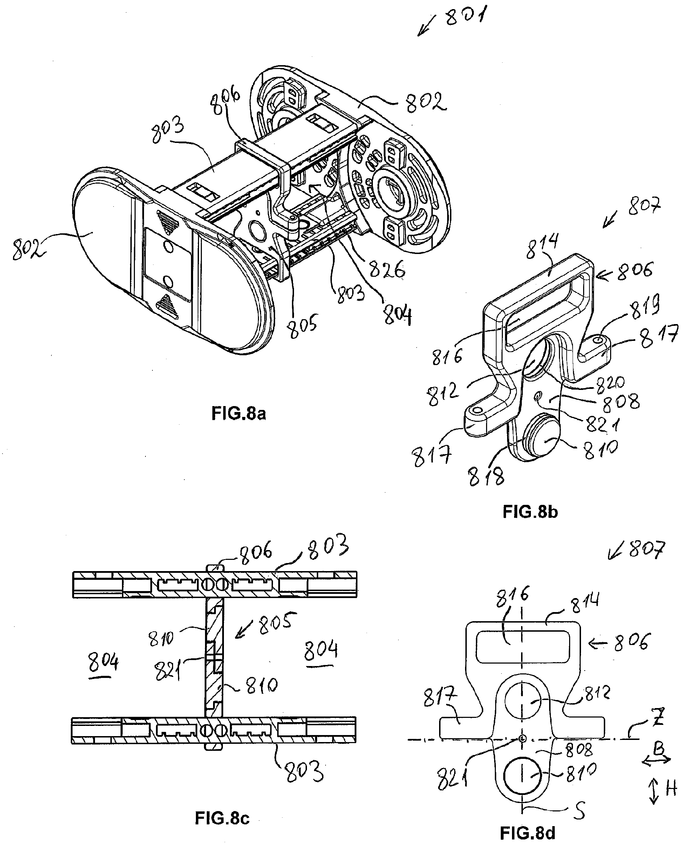

FIG.8a zeigt ein Kettenglied 801 einer Energieführungskette mit zwei Kettenlaschen bzw. Seitenteilen 802 in an sich bekannter Bauweise. Die Seitenteile 802 sind durch zwei Querstege 803 voneinander beabstandet und miteinander verbunden. Die Seitenteile 802 und die Querstege 803 begrenzen einen Aufnahmeraum 804 des Kettenglieds 801 zur Aufnahme von Versorgungsleitungen (nicht gezeigt), die durch die Energieführungskette geführt werden. Der Aufnahmeraum 804 ist im gezeigten Beispiel durch einen Trennsteg 805 vertikal zweigeteilt. Der Trennsteg 805 ist dabei plattenartig ausgeführt und an jeder seiner Endseiten an jeweils einem der Querstege 803 befestigt. Der Trennsteg 805 weist dazu endseitig jeweils einen Befestigungsbereich 806 auf. Die Befestigungsbereiche 806 sind hier identisch gestaltet.

Der Trennsteg 805 ist, gemäß dem zweiten Aspekt, zweiteilig ausgeführt. In allen zum zweiten Aspekt gezeigten Ausführungsbeispielen ist der Trennsteg 805; 905; 1005 aus zwei Gleichteilen, nämlich den Teilen 807; 907; 1007 zusammengesetzt, welche vorzugsweise einstückig als Spritzgussteil aus Kunststoff hergestellt sind. Die beiden Teile 807; 907; 1007 sind dabei lösbar miteinander verbunden.

Das Teil 807 ist einzeln in FIG. 8b und 8d gezeigt. Jedes der beiden einzelnen Teile 807 eines Trennstegs 805 ist plattenartig ausgeführt, mit einer Hauptebene, die der Zeichnungsebene der FIG.8d entspricht. In der Hauptebene liegen die Breitenrichtung B und die senkrecht dazu verlaufende Höhenrichtung H des Trennstegs 805 per se. Die Breitenrichtung B entspricht, im eingebauten Zustand des Trennstegs 805, der Längsrichtung des Kettenglieds 801 bzw. der geführten Leitungen. Die Höhenrichtung H entspricht der Richtung von einem zum anderen Befestigungsbereich 806 senkrecht zu den Querstegen 803 und der Längsrichtung des Kettenglieds 801.

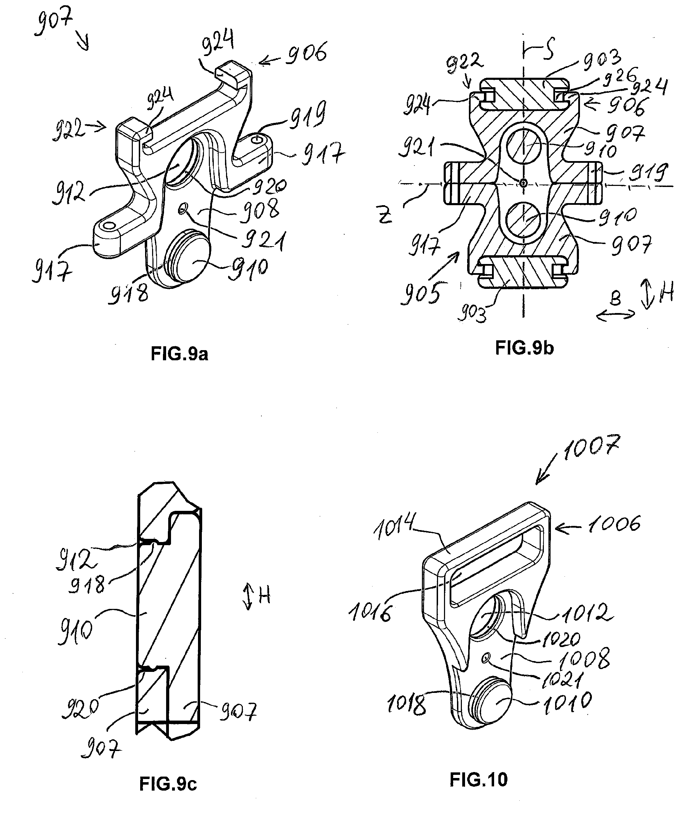

Der Befestigungsbereich 806 ist in FIG.8a-d als ein umlaufender Rahmen 814 ausgeführt, der eine Öffnung 816 aufweist. Die Öffnung 816 dient zur Aufnahme jeweils eines Querstegs 803, der durch diese Öffnung 816 senkrecht zur Hauptebene einführbar ist. Das Ausführungsbeispiel in FIG. 10 weist ebenfalls einen solchen Rahmen 1014 als Befestigungsbereich 1006 auf. Der Rahmen 814; 1014 kann ein ungewolltes Abtrennen bzw. Ablösen des Querstegs besonders zuverlässig verhindern. Der Rahmen 814; 1014 muss jedoch nicht zwingend vollständig umlaufen, sondern kann z.B. auch als C-förmige Klammer ausgeführt sein, welche die abgewandte Außenseite des Querstegs 803, teilweise, vorzugsweise überwiegend umgreift.

Jedes der Teile 807 in FIG.8a-d weist jeweils einen endseitigen Befestigungsbereich 806 und einen zungenartigen Körper 808 auf. Jeweils zwei Teile 807 sind in Richtung senkrecht zur Hauptebene miteinander verbindbar bzw. voneinander lösbar. Um einen Trennsteg 805 aus den zwei Teilen 807 zusammenzusetzen, werden die Teile 807 so aneinander gelegt, dass deren Körper 808 in der Hauptebene überlappen. Die gemeinsame Wandstärke der beiden Körper 808 in diesem Bereich entspricht vorzugsweise der Stärke des jeweiligen Befestigungsbereichs 806. So werden sprungfreie, flache Außenseiten ohne Störkanten erzielt. Jeder Teil 807 hat genau einen Befestigungsbereich 806.

Der Körper 808 hat einen senkrecht zur Hauptebene B-H vorstehenden kreiszylindrischen Sicherungszapfen 810 und eine senkrecht zur Hauptebene B-H vertiefte kreiszylindrische Sicherungsaufnahme 812. Der Sicherungszapfen 810 ist an einem vom Befestigungsbereich 806 abgewandten Endbereich des Körpers 808 angeordnet. Die Sicherungsaufnahme 812 ist bzgl. der Höhenrichtung H zwischen dem Befestigungsbereich 806 und dem Sicherungszapfen 810 angeordnet. Der Sicherungszapfen 810 und die Sicherungsaufnahme 812 sind in der Höhenrichtung H voneinander beabstandet. In allen hier gezeigten Ausführungsbeispielen ist die Sicherungsaufnahme 812; 912; 1012 als Durchgangsloch ausgeführt. Der Sicherungszapfen 810 und die Sicherungsaufnahme 812 sind bzgl. der Breitenrichtung B auf einer Linie angeordnet, welche eine Symmetrieachse S des Teils 807 bildet. Das Teil 807 ist somit spiegelsymmetrisch zur Symmetrieachse S in der Hauptebene senkrecht zur Breitenrichtung B. Wenn zwei Teile 807 miteinander zu einem Trennsteg 805 verbunden sind, ist der Sicherungszapfen 810 in der Sicherungsaufnahme 812 aufgenommen und schließt bündig mit der Oberfläche des anderen Teils 807, die dem Sicherungszapfen 810 des einen Teils 807 abgewandt ist, ab.

Auch asymmetrische Teile liegen grundsätzlich im Rahmen der Erfindung, solange Außenkonturen des Sicherungszapfens 810 und der Sicherungsaufnahme 812 passend zueinander ausgeführt und angeordnet sind, z.B. symmetrisch bzgl. einer Symmetrieachse Z des Paars Sicherungszapfen/Sicherungsaufnahme, die in der Hauptebene senkrecht zur Höhenrichtung H verläuft. Der Sicherungszapfen 810 und die Sicherungsaufnahme 812 sind vorzugsweise aber nicht zwingend kreiszylindrisch bzw. zylindrisch ausgeführt. Der Sicherungszapfen 810 und die Sicherungsaufnahme 812 können jeweils einen Querschnitt parallel zur Hauptebene aufweisen, der sich in Richtung senkrecht zur Hauptebene ändert. Der Sicherungszapfen 810 ist stets komplementär zur Sicherungsaufnahme 812 gestaltet, für eine form- und/oder kraftschlüssige Verbindung.

FIG.9c zeigt eine Teilansicht eines Querschnitts des Trennstegs 905, wobei der Sicherungszapfen 910 mit der Sicherungsaufnahme 912 durch Zusammenwirkung einer Rastzunge 918 und einer Rastaussparung 920 verrastet ist. Eine Bauweise mit Rastverbindung ist für alle Ausführungsbeispiele bevorzugt. In FIG.8b ist z.B. die vorzugsweise durchgehend umlaufende Rastzunge 818 am Sicherungszapfen 810 und die vorzugsweise zylindrische Rastaussparung 820 in der Sicherungsaufnahme 812 gezeigt.

Jedes Teil 807 nach FIG.8A-8D hat zwei in Breitenrichtung B vorstehende Fortsätze 817. Jeder Fortsatz 817 weist ein Verbindungsloch 819 auf. Das Verbindungsloch 819 hat eine Achse die in der Hauptebene liegt. Wenn beide Teile 807 verbunden sind, fluchten jeweils zwei Verbindungslöcher 819 miteinander. Die zwei Teile 807 können so anhand der Fortsätze 817 in Richtung senkrecht zur Hauptebene aneinander gesichert werden, bspw. mit Schrauben, Sicherungsstiften oder ähnlichem, die in die Verbindungslöcher 819 eingesetzt werden und senkrecht zur Hauptebene sichern. Die Fortsätze 817 sind bzgl. der Höhenrichtung H einseitig der Symmetrieachse Z des Paars Sicherungszapfen/Sicherungsaufnahme angeordnet. Bei den in FIG.8a, b, d und FIG. 9a, 9b gezeigten Ausführungsbeispielen schließen die Fortsätze 817; 917 bündig mit der Achse Z ab.

Das Teil 807 kann optional eine zusätzliche Durchgangsöffnung 821 haben, die auf der Symmetrieachse S äquidistant zwischen dem Sicherungszapfen 810 und der Sicherungsaufnahme 812 liegt. Wenn zwei Teile 807 zu einem Trennsteg 805 verbunden sind, fluchten auch diese Durchgangsöffnungen 821 miteinander, wie in FIG. 8C am besten zu sehen. Diese können auch für eine zusätzliche Sicherung verwendet werden, z.B. falls keine Fortsätze gewünscht sind.

FIG. 9a, b und FIG.10 zeigen weitere Ausführungsbeispiele von baugleichen Teilen 907; 1007 eines Trennstegs. Zu diesen Abwandlungen des Teils 807 aus FIG.8a-8d werden nur die Unterschiede beschrieben, alle sonstigen Merkmale sind identisch bzw. entsprechen denen zu FIG.8a-8d.

Das Teil 907 in FIG. 9a, b unterscheidet sich vom Teil 807 nur in der Form des Befestigungsbereichs. Der Befestigungsbereich 906 ist hier als Halteklammer 922 ausgeführt. Die Halteklammer 922 dient zum rastenden Eingreifen in eine als Vertiefung ausgeführte Rastleiste eines Querstegs (nicht gezeigt). Dazu sind einander gegenüberliegende Rasthaken 924 vorgesehen. Die Rasthaken 924 der Halteklammer 922, die sich zueinander in Breitenrichtung des Teils 907 erstrecken, können mit der Rastleiste 826; 926 des Querstegs 803; 903 verrastet werden und stabiler bzw. fester als übliche Rastverbindungen ausgeführt sein.

Das Teil 1007 in FIG. 10 unterscheidet sich vom Teil 807 aus FIG.8A-8D lediglich dadurch, dass es keine Fortsätze 817 aufweist. Die zwei Teile 807; 907; 1007 aus FIG.8A-FIG.10 halten jeweils durch die Rastverbindung einer Rastzunge 1018 mit einer Rastaussparung 1020 an Sicherungszapfen 810; 1010 bzw. Sicherungsaufnahme 812; 1012. Die Durchgangsöffnungen 1021 zwischen dem Sicherungszapfen 1010 und der Sicherungsaufnahme 1012 können für eine zusätzliche Sicherung verwendet werden, bspw. durch einen Bolzen oder ähnliches.

Der vorgeschlagene Trennsteg 805; 905; 1005 erlaubt eine zuverlässige Sicherung der Querstege an den Kettenlaschen, sodass diese erst in Höhenrichtung H abgetrennt werden können nachdem die beiden Teile 807; 907; 1007 voneinander in senkrechte Richtung zur Längsrichtung und Höhenrichtung getrennt wurden.

### Bezugszeichenliste

**FIG.1A****-****FIG.3D****:**
   1 Energieführungskette
   1A, 1B Laschenstrang
   2 Kettenlasche
   2A, 2B Überlappungsbereich (Kettenlasche)
   2C Mittelbereich (Kettenlasche)
   3 Seitenteil
   3A, 3B Endbereich (Seitenteil)
   3C Mittelbereich (Seitenteil)
   4 Quersteg
   5A, 5B Kettenglied
   6A, 6B Schmalseiten (Kettenlasche)
   7 Materialverdickung
   8 Befestigungszapfen
   9A, 9B Schmalseiten (Seitenteil)
   20 Grundkörper (Kettenlasche)
   21 erster Durchbruch (Anschlagdurchbrüche)
   21A, 21B Endbereich (Anschläge)
   22 zweiter Durchbruch (Zapfenaufnahme)
   23 Aussparung
   24 Rand
   30 Grundkörper (Seitenteil)
   31 erster Vorsprung (Anschlagvorsprünge)
   31A, 31B Anschlagfläche
   32 zweiter Vorsprung / (Zapfenvorsprünge)
   35 Querfortsatz
   36 Werkzeugaussparung
   A Schwenkachse
   L Längsrichtung
   S Symmetrieachse
   T2 Lachendicke
**FIG.4A****-****FIG.6C****:**
   6A, 6B Schmalseiten (Kettenlasche)
   20 Grundkörper (Kettenlasche)
   42; 52; 62 Kettenlasche
   40A, 40B; 50; 60A, 60B Versteifungsbereich
**FIG.7A-7C****:**
   21 Anschlagdurchbrüche
   71 Randbereich
   71A, 71B Endbereich (Anschläge)
   72 Kettenlasche
   73 Seitenteil
   79 Vertiefung
**FIG.8A****-****FIG.10****:**
   801 Kettenglied
   802-Seitenteil
   803; 903 Quersteg
   804 Aufnahmeraum des Kettenglieds
   805; 905 Trennsteg
   806; 906; 1006 Befestigungsbereich
   807; 907; 1007 Teil zum Zusammensetzen eines Trennstegs
   808; 908; 1008 Körper des Teils
   810; 910; 1010 Sicherungszapfen
   812; 912; 1012 Sicherungsaufnahme
   814; 1014 Rahmen
   816; 1016 Öffnung
   817; 917 Fortsatz
   818; 918; 1018 Rastzunge
   819; 919 Verbindungsloch
   820; 920; 1020 Rastaussparung
   821; 921; 1021 Durchgangsöffnung
   922 Halteklammer
   924 Rasthaken
   826; 926 Rastleiste des Querstegs
   B Breitenrichtung
   H Höhenrichtung
   S, Z Symmetrieachsen
**FIG.11A-12F****:**
   2 Kettenlasche
   5A, 5B Kettenglied
   7 Materialverdickung
   8 Befestigungszapfen
   9A, 9B Schmalseiten (Seitenteil)
   12 Energieführungskette
   12A, 12B Laschenstrang
   13 Seitenteil
   13A, 13B Endbereich (Seitenteil)
   13C Mittelbereich (Seitenteil)
   15A, 15B Kettenglied
   21 erster Durchbruch (Anschlagdurchbrüche)
   22 zweiter Durchbruch (Zapfenaufnahme)
   23 Aussparung
   24 Rand
   30 Grundkörper (Seitenteil)
   35 Querfortsatz
   124 Quersteg
   124A, 124B Flügel
   124C Stützfläche
   125 Spezialverbinder (für Querstege)
   125A Befestigungsende
   125B Stützende
   125C Übergang
   131 erster Vorsprung (Anschlagvorsprünge)
   131A, 131B Anschlagfläche
   132 zweiter Vorsprung / (Zapfenvorsprünge)
   A Schwenkachse
   T12 Abmessung

## Patentansprüche

1. Energieführungskette (1) für Leitungen, wie Kabel, Schläuche oder dgl., umfassend Kettenglieder (5A; 5B) mit seitlich gegenüberliegenden Kettenlaschen, wobei die Energieführungskette zwei seitliche Laschenstränge (1A, 1B) aufweist, jeder Laschenstrang in Längsrichtung gegeneinander schwenkbar miteinander verbundene Kettenlaschen (2), welche jeweils einen ersten und einen zweiten Überlappungsbereich (2A, 2B) aufweisen, und Seitenteile (3) aus Kunststoff umfasst, welche jeweils zwei Endbereiche (3A, 3B) aufweisen; wobei die Kettenlaschen (2) aus einem anderen Werkstoff, insbesondere mit höherer Festigkeit und/oder Steifigkeit, hergestellt sind als die Seitenteile (3)
**dadurch gekennzeichnet, dass**
zumindest in einem Abschnitt jedes Laschenstrangs (1A, 1B), aufeinanderfolgende Kettenlaschen (2) mit Durchbrüchen (21; 22) im ersten Überlappungsbereich (2A) und Durchbrüchen (21; 22) im zweiten Überlappungsbereich (2B) ausgeführt sind, wobei Durchbrüche (21; 22) von zwei aufeinanderfolgenden Kettenlaschen (2) jeweils zumindest teilweise überlappen; und in diesem Abschnitt ein Seitenteil (3) zu jeder zweiten Kettenlasche (2) zugeordnet ist, das jeweils in seinen beiden Endbereichen (3A, 3B) einen oder mehrere Vorsprünge (31; 32) aufweist, mit denen das Seitenteil durch beide Überlappungsbereiche der ihm zugeordneten Kettenlasche greift, und das Seitenteil mit dem einen oder mehreren Vorsprüngen (31; 32) jedes Endbereichs durch überlappende Durchbrüche (21; 22) der zugeordneten Kettenlasche (2) und der jeweils angrenzenden Kettenlasche (2) greift, um den relativen Schwenkwinkel aufeinanderfolgender Kettenlaschen zu begrenzen und/oder diese zu verbinden.

2. Energieführungskette nach Anspruch 1, **dadurch gekennzeichnet, dass** das Seitenteil die dem Seitenteil zugeordnete Kettenlasche in ihrem ersten Überlappungsbereich mit einer ersten innerhalb des Laschenstrangs benachbarten Kettenlasche, und in ihrem zweiten Überlappungsbereich mit einer zweiten innerhalb des Laschenstrangs benachbarten Kettenlasche verbindet, wobei zumindest in dem Längsabschnitt beider Laschenstränge die Kettenlaschen (2) und/oder die Seitenteile (3) vorzugsweise baugleich ausgeführt sind.

3. Energieführungskette nach Anspruch 2, **dadurch gekennzeichnet, dass** die Kettenlaschen (2) in beiden Überlappungsbereichen (2A, 2B) jeweils mindestens zwei, insbesondere vier, um eine Schwenkachse verteilte erste Durchbrüche (21), vorzugsweise bogenförmige, erste Durchbrüche (21), aufweisen, deren Endbereiche (21A, 21B) zur Schwenkwinkelbegrenzung jeweils an Anschlagflächen (31A, 31B) eines entsprechenden durchgreifenden ersten Vorsprungs (31) anschlagen.

4. Energieführungskette nach einem der Ansprüche 1 bis 3, **dadurch gekennzeichnet, dass** die Kettenlaschen (2) in beiden Überlappungsbereichen (2A, 2B) jeweils zentrisch auf der Schwenkachse (A) einen kreisförmigen Durchbruch (22) aufweisen, in den koaxial ein Vorsprung (32) des Seitenteils (3) eingreift zwecks Drehgelenkverbindung aufeinanderfolgender Kettenlaschen (2), wobei die Kettenlaschen (2) vorzugsweise in beiden Überlappungsbereichen (2A, 2B) jeweils mindestens einen weiteren Durchbruch (21) aufweisen, welcher zur Schwenkwinkelbegrenzung mit Anschlagflächen (31A, 31B) eines entsprechenden Vorsprungs (31) des Seitenteils zusammenwirken.

5. Energieführungskette nach einem der Ansprüche 1 bis 4, **dadurch gekennzeichnet, dass** die Seitenteile (3) einteilig hergestellt sind und/oder jedes Seitenteil (3) einseitig angeordnet ist.

6. Energieführungskette nach einem der Ansprüche 1 bis 5, **dadurch gekennzeichnet, dass** die Kettenlaschen (2) aus Metallblech oder aus Faserverbundkunststoff, insbesondere mit konstanter Laschendicke (T2) hergestellt sind.

7. Energieführungskette nach einem der Ansprüche 1 bis 6, insbesondere nach Anspruch 6, **dadurch gekennzeichnet, dass** alternierend seitlich versetzt innere und äußere Kettenlaschen (2) aufeinander folgen welche jeweils nur einseitig überlappen (2A; 2B) und/oder dass Seitenteile (3) jeweils außen seitlich an den zugeordneten Kettenlasche (2) angeordnet sind.

8. Energieführungskette nach einem der Ansprüche 1 bis 7, **dadurch gekennzeichnet, dass** die Seitenteile (3) jeweils zwischen den Endbereichen (3A, 3B) einen Mittelbereich (3C) mit gegenüberliegenden Schmalseiten (9A, 9B) umfassen und im Mittelbereich (3C) jeweils mindestens einen vorstehenden Befestigungszapfen (8), insbesondere zwei an den Schmalseiten angeordnete Befestigungszapfen (8), für einen Quersteg (4) aufweisen, besonders bevorzugt wobei jeweils zwei Seitenteile (3) durch zwei Querstege (8) verbunden sind und jeder Befestigungszapfen (8) durch eine entsprechende Aussparung (23) der jeweils zugeordneten Kettenlasche (2) hervorragt, und die Querstege (4) vorzugsweise endseitig am Rand (24) der Aussparung (23) anliegen um die zugeordnete Kettenlasche (2) in seitlicher Richtung zu halten.

9. Energieführungskette nach einem der vorstehenden Ansprüche, **dadurch gekennzeichnet, dass** alle Kettenlaschen (2) und Seitenteile (3) im Wesentlichen deckungsgleiche Außenkonturen aufweisen und/oder als ebene Bauteile ohne Kröpfung bzw. Versprung ausgeführt sind.

10. Energieführungskette nach einem der vorstehenden Ansprüche, insbesondere nach Anspruch 6 und/oder 9, **dadurch gekennzeichnet, dass** die Kettenlaschen (2) jeweils zwei gegenüberliegende Schmalseiten (6A, 6B) aufweisen und an mindestens einer Schmalseite, vorzugsweise jeweils an beiden Schmalseiten, ein quer stehender Versteifungsbereich (40A, 40B; 50; 60A, 60B) vorgesehen ist.

11. Energieführungskette nach einem der vorstehenden Ansprüche, **dadurch gekennzeichnet, dass** die Vorsprünge (31; 32) mit einer Abmessung vom Seitenteil (3) vorstehen die mindestens das zweifache der Laschendicke (T2) einer Kettenlasche (2) im Überlappungsbereich (2A; 2B) beträgt und vorzugsweise weniger als das Dreifache dieser Laschendicke.

12. Energieführungskette nach einem der vorstehenden Ansprüche, insbesondere nach Anspruch 11, **dadurch gekennzeichnet, dass** endseitig an zumindest einem Vorsprung (31) zur Schwenkwinkelbegrenzung in jedem Endbereich (3A, 3B) jeweils mindestens ein Querfortsatz (35) vorgesehen ist, welche von einer Kettenlasche (2) hintergreifbar ist.

13. Energieführungskette nach einem der vorstehenden Ansprüche, **dadurch gekennzeichnet, dass** zumindest einer der Durchbrüche (71) zur Schwenkwinkelbegrenzung in jedem Überlappungsbereich der Kettenlasche anschlagwirksame, umgeformte Rand- bzw. Endbereiche (71A, 71B) und/oder zur Drehgelenkverbindung dienende umgeformte Randbereiche aufweist.

14. Energieführungskette nach einem der vorstehenden Ansprüche, umfassend ein erstes Trum, ein zweites Trum und dazwischen einen Umlenkbereich, wobei das erste Trum mit einem Endbereich an einem Mitnehmer einer relativbeweglichen Anschlussstelle befestigt ist, **dadurch gekennzeichnet, dass**
- der Längsabschnitt, in welchem aufeinanderfolgende Kettenlaschen (2) mit Durchbrüchen (21; 22) im ersten und im zweiten Überlappungsbereich (2A, 2B) ausgeführt sind und ein Seitenteil (3) zu jeder zweiten Kettenlasche zugeordnet ist, sich ausgehend vom Endbereich am Mitnehmer über mindestens ein Drittel der Gesamtlänge der Energieführungskette erstreckt; und/oder
- dass beide Laschenstränge (1A, 1B) zwischen ihren Endbereichen durchgehend aus baugleichen Kettenlaschen (2) und Seitenteilen (3) bestehen.

15. **Kettenglied** (5A) für eine Energieführungskette (1) umfassend zwei gegenüberliegende Kettenlaschen (2) aus Metall mit Durchbrüchen (21; 22) in einem ersten Überlappungsbereich (2A) und Durchbrüchen (21; 22) in einem zweiten Überlappungsbereich (2B) der jeweiligen Kettenlasche,
**dadurch gekennzeichnet, dass** seitlich zu jeder der zwei gegenüberliegenden Kettenlaschen (2) jeweils ein Seitenteil (3) aus Kunststoff vorgesehen ist, das zwei Endbereiche (3A, 3B) mit jeweils mindestens einem Vorsprung (31; 32), insbesondere mit einer Anzahl Vorsprünge (21; 22) entsprechend der Anzahl Durchbrüche (21; 22) eines Überlappungsbereichs (2A, 2B), aufweist, wobei der mindestens eine Vorsprung (31; 32) durch einen Durchbruch (21; 22) der zugeordneten Kettenlasche (2) greift, wobei das Seitenteil anhand seiner Vorsprünge durch beide Überlappungsbereiche der ihm zugeordneten Kettenlasche greift.

## Claims

1. An energy guide chain (1) for lines like cables, hoses or the like including chain links (5A, 5B) with laterally oppositely disposed chain plates, wherein the energy guide chain has two lateral plate lines (1A, 1B), each plate line includes chain plates (2) which are connected together pivotably relative to each other in the longitudinal direction and which each have a first and a second overlap region (2A, 2B), and side parts (3) of plastic which respectively have two end regions (3A, 3B), wherein the chain plates (2) are made from a different material, in particular of higher strength and/or stiffness, than the side parts (3), **characterised in that** at least in a portion of each plate line (1A, 1B) successive chain plates (2) have through apertures (21, 22) in the first overlap region (2A) and through apertures (21, 22) in the second overlap region (2B), wherein through apertures (21, 22) of two successive chain plates (2) respectively at least partially overlap; and in said portion associated with each second chain plate (2) is a side part (3) which in its two end regions (3A, 3B) respectively has one or more projections (31, 32), with which the side part engages through both overlap regions of the chain plate associated therewith and the side part with the one or more projections (31, 32) of each end region engages through overlapping through apertures (21, 22) of the associated chain plate (2) and the respectively adjoining chain plate (2) in order to limit the relative pivotal angle of successive chain plates and/or to connect same.

2. An energy guide chain according to claim 1 **characterised in that** the side part connects the chain plate associated with the side part in its first overlap region to a first adjacent chain plate within the plate line and in its second overlap region to a second adjacent chain plate within the plate line, wherein the chain plates (2) and/or the side parts (3) are preferably of identical structure at least in the longitudinal portion of both plate lines.

3. An energy guide chain according to claim 2 **characterised in that** the chain plates (2) in both overlap regions (2A, 2B) respectively have at least two, in particular four, first through apertures (21) distributed around a pivot axis, preferably arcuate first through apertures (21), whose end regions (21A, 21B) respectively abut at abutment surfaces (31A, 31B) of a corresponding first projection (31) engaging therethrough to limit the pivotal angle.

4. An energy guide chain according to one of claims 1 to 3 **characterised in that** the chain plates (2) in both overlap regions (2A, 2B) have a circular through aperture (22) respectively concentrically on the pivot axis (A), into which aperture a projection (32) of the side part (3) coaxially engages for the purposes of producing a rotary joint connection of successive chain plates (2), wherein the chain plates (2) preferably respectively have in both overlap regions (2A, 2B) at least one further through aperture (21) which cooperate with abutment surfaces (31A, 31B) of a corresponding projection (31) of the side part for limiting the pivotal angle.

5. An energy guide chain according to one of claims 1 to 4 **characterised in that** the side parts (3) are produced in one piece and each side part (3) is arranged on one side.

6. An energy guide chain according to one of claims 1 to 5 **characterised in that** the chain plates (2) are produced from metal sheet or from fibre composite material, in particular with a constant plate thickness (T2).

7. An energy guide chain according to one of claims 1 to 6, in particular according to claim 6, **characterised in that** inner and outer chain plates (2) occur in succession alternately in laterally displaced relationship, which plates respectively overlap only at one side (2A, 2B) and/or that side parts (3) are respectively arranged externally laterally on the associated chain plate (2).

8. An energy guide chain according to one of claims 1 to 7 **characterised in that** the side parts (3) respectively include between the end regions (3A, 3B) a central region (3C) with oppositely disposed narrow sides (9A, 9B) and in the central region (3C) respectively have at least one projecting fixing pin (8), in particular two fixing pins (8) arranged at the narrow sides, for a transverse bar (4), especially preferred wherein two respective side parts (3) are connected by two transverse bars (4) and each fixing pin (8) projects through a corresponding opening (23) in the respectively associated chain plate (2) and the transverse bars (4) preferably bear at the end against the edge (24) of the opening (23) to hold the associated chain plate (2) in the lateral direction.

9. An energy guide chain according to one of the preceding claims **characterised in that** all chain plates (2) and side parts (3) are of substantially congruent external contours and/or are in the form of flat components without a cranked configuration or offset.

10. An energy guide chain according to one of the preceding claims, in particular claim 6 and/or claim 10, **characterised in that** the chain plates (2) each have two oppositely disposed narrow sides (6A, 6B) and at at least one narrow side, preferably each of the two narrow sides, there is provided a transversely disposed stiffening region (40A, 40B, 50, 60A, 60B).

11. An energy guide chain according to one of the preceding claims **characterised in that** the projections (31, 32) project from the side part (3) with a dimension which is at least twice the plate thickness (T2) of a chain plate (2) in the overlap region (2A, 2B) and preferably less than three times said plate thickness.

12. An energy guide chain according to one of the preceding claims, in particular according to claim 12, **characterised in that** provided at the end at at least one projection (31) for limiting the pivotal angle in each end region (3A, 3B) is at least one respective transverse extension (35), behind which a chain plate (2) can engage.

13. An energy guide chain according to one of the preceding claims **characterised in that** at least one of the apertures (71) for limiting the pivotal angle in each overlap region of the chain plate has abutment-operative shaped edge or end regions (71A, 71B) and/or shaped edge regions serving to form the rotary joint connection.

14. An energy guide chain according to one of the preceding claims including a first run, a second run and therebetween a direction-changing region, wherein the first run is fixed with an end region to an entrainment member of a relatively moveable connecting location, **characterised in that** the longitudinal portion in which successive chain plates (2) are provided with through apertures (21, 22) in the first and in the second overlap region (2A, 2B) and a side part (3) is associated with each second chain plate and extends from the end region at the entrainment member over at least a third of the overall length of the energy guide chain; and/or **in that**
both plate lines (1A, 1B) between their end regions comprise throughout structurally identical chain plates (2) and side parts (3).

15. A chain link (5A) for an energy guide chain (1) including two oppositely disposed chain plates (2) of metal with through apertures (21, 22) in a first overlap region (2A) and through apertures (21, 22) in the a second overlap region (2B) of the respective chain plate,
**characterised in that** provided laterally in relation to each of the two oppositely disposed chain plates (2) is a respective side part (3) of plastic, which has two end regions (3A, 3B) each having at least one projection (31, 32), in particular with a number of projections (31, 32) corresponding to the number of through apertures (21, 22) in an overlap region (2A, 2B), wherein the at least one projection (31, 32) engages through a through aperture (21, 22) in the associated chain plate (2), wherein the side part engages by means of its projections through both overlap regions of the chain plate associated therewith.

## Revendications

1. Chaîne porte câbles (1) pour des conduites telles que des câbles, des tuyaux ou similaires, comprenant des maillons de chaîne (5A; 5B) avec des pattes de chaîne latéralement opposés, la chaîne porte câbles présentant deux brins de pattes latéraux (1A, 1B), chaque brin de patte comprenant des pattes de chaîne (2) reliées entre eux de manière pivotante l'une par rapport à l'autre dans la direction longitudinale, qui présentent chacune une première et une deuxième zone de chevauchement (2A, 2B), et des parties latérales (3) en matière plastique, qui présentent chacune deux zones d'extrémité (3A, 3B); les pattes de chaîne (2) étant fabriquées dans un autre matériau, en particulier avec une résistance et/ou une rigidité plus élevées, que les parties latérales (3),
**caractérisée en ce que**
au moins dans une section de chaque brin de patte (1A, 1B), des pattes de chaîne (2) successives sont réalisées avec des ouvertures (21; 22) dans la première zone de chevauchement (2A) et des ouvertures (21; 22) dans la deuxième zone de chevauchement (2B), des ouvertures (21; 22) de deux pattes de chaîne (2) successives se chevauchent respectivement au moins partiellement; et dans cette section, une partie latérale (3) est associée à chaque deuxième patte de chaîne (2), laquelle présente respectivement dans ses deux zones d'extrémité (3A, 3B) une ou plusieurs saillies (31; 32) avec lesquelles la partie latérale s'engage à travers les deux zones de chevauchement de la patte de chaîne qui lui est associée, et la partie latérale s'engage avec l'une ou les plusieurs saillies (31; 32) de chaque zone d'extrémité à travers des ouvertures (21; 22) se chevauchant de la patte de chaîne (2) associée et de la patte de chaîne (2) respectivement adjacente, afin de limiter l'angle de pivotement relatif de pattes de chaîne successives et/ou de les relier.

2. Chaîne porte-câbles selon la revendication 1, **caractérisée en ce que** la partie latérale relie la patte de chaîne associée à la partie latérale dans sa première zone de chevauchement à une première patte de chaîne voisine dans le brin de pattes et dans sa deuxième zone de chevauchement à une deuxième patte de chaîne voisine dans le brin de pattes, les pattes de chaîne (2) et/ou les parties latérales (3) étant de préférence de construction identique au moins dans la section longitudinale des deux brins de pattes.

3. Chaîne porte-câbles selon la revendication 2, **caractérisée en ce que** les pattes de chaîne (2) présentent dans les deux zones de chevauchement (2A, 2B) respectivement au moins deux, en particulier quatre, premières ouvertures (21) réparties autour d'un axe de pivotement, de préférence des premières ouvertures (21) en forme d'arc, dont les zones d'extrémité (21A, 21B) butent respectivement contre des surfaces de butée (31A, 31B) d'une première saillie (31) correspondante qui les traverse, pour limiter l'angle de pivotement.

4. Chaîne porte-câbles selon l'une des revendications 1 à 3, **caractérisée en ce que** les pattes de chaîne (2) présentent dans les deux zones de chevauchement (2A, 2B), respectivement au centre de l'axe de pivotement (A), une ouverture circulaire (22) dans lequel s'engage coaxialement une saillie (32) de la partie latérale (3) en vue de la liaison par articulation pivotante de pattes de chaîne (2) successives, les pattes de chaîne (2) présentant de préférence dans les deux zones de chevauchement (2A, 2B) respectivement au moins une autre ouverture (21) qui coopère avec des surfaces de butée (31A, 31B) d'une saillie correspondante (31) de la partie latérale pour limiter l'angle de pivotement.

5. Chaîne porte-câbles selon l'une des revendications 1 à 4, **caractérisée en ce que** les parties latérales (3) sont fabriquées d'un seul tenant et/ou **en ce que** chaque partie latérale (3) est disposée d'un seul côté.

6. Chaîne porte-câbles selon l'une des revendications 1 à 5, **caractérisée en ce que** les pattes de chaîne (2) sont fabriquées en tôle métallique ou en matière plastique composite renforcée par des fibres, en particulier avec une épaisseur de patte constante (T2).

7. Chaîne porte-câbles selon l'une des revendications 1 à 6, en particulier selon la revendication 6, **caractérisée en ce que** des pattes de chaîne (2) intérieurs et extérieurs se succèdent en étant décalés latéralement en alternance, lesquels ne se chevauchent respectivement que d'un côté (2A; 2B) et/ou **en ce que** des parties latérales (3) sont respectivement disposées latéralement à l'extérieur sur les pattes de chaîne (2) associées.

8. Chaîne porte-câbles selon l'une des revendications 1 à 7, **caractérisée en ce que** les parties latérales (3) comprennent chacune, entre les zones d'extrémité (3A, 3B), une zone centrale (3C) avec des côtés étroits (9A, 9B) opposés et, dans la zone centrale (3C), chacune au moins un tenon de fixation (8) en saillie, en particulier deux tenons de fixation (8) disposés sur les côtés étroits, pour une barrette transversale (4), de préférence deux parties latérales (3) étant reliées par deux barrettes transversales (8) et chaque tenon de fixation (8) faisant saillie à travers un évidement correspondant (23) de la patte de chaîne (2) respectivement associée et les barrettes transversales (4) s'appuyant de préférence à l'extrémité sur le bord (24) de l'évidement (23) afin de maintenir la patte de chaîne (2) associée en direction latérale.

9. Chaîne porte-câbles selon l'une des revendications précédentes, **caractérisée en ce que** toutes les pattes de chaîne (2) et les parties latérales (3) présentent des contours extérieurs sensiblement identiques et/ou sont réalisées sous forme de pièces planes sans coude ou saillie.

10. Chaîne porte-câbles selon l'une des revendications précédentes, en particulier selon la revendication 6 et/ou 9, **caractérisée en ce que** les pattes de chaîne (2) présentent chacun deux petits côtés opposés (6A, 6B) et **en ce qu'**une zone de renforcement transversale (40A, 40B; 50; 60A, 60B) est prévue sur au moins un petit côté, de préférence sur chacun des deux petits côtés.

11. Chaîne porte-câbles selon l'une des revendications précédentes, **caractérisée en ce que** les saillies (31; 32) dépassent de la partie latérale (3) avec une dimension qui est au moins le double de l'épaisseur de la patte (T2) d'une patte de chaîne (2) dans la zone de chevauchement (2A; 2B) et de préférence moins de trois fois cette épaisseur de patte.

12. Chaîne porte-câbles selon l'une des revendications précédentes, en particulier selon la revendication 11, **caractérisée en ce qu'**au moins un prolongement transversal (35) est prévu à l'extrémité d'au moins une saillie (31) pour limiter l'angle de pivotement dans chaque zone d'extrémité (3A, 3B), lequel peut être saisi par l'arrière par une patte de chaîne (2).

13. Chaîne porte-câbles selon l'une des revendications précédentes, **caractérisée en ce qu'**au moins l'une des ouvertures (71) pour la limitation de l'angle de pivotement dans chaque zone de chevauchement de la patte de chaîne présente des zones de bord ou d'extrémité (71A, 71B) déformées agissant comme des butées et/ou des zones de bord déformées servant à la liaison par articulation tournante.

14. Chaîne porte-câbles selon l'une des revendications précédentes, comprenant un premier brin, un deuxième brin et une zone de renvoi entre les deux, le premier brin étant fixé par une zone d'extrémité à un entraîneur d'un point de raccordement mobile par rapport à l'autre, **caractérisée**
- **en ce que** la section longitudinale, dans laquelle des pattes de chaîne (2) successives sont réalisées avec des ouvertures (21; 22) dans la première et la deuxième zone de chevauchement (2A, 2B) et une partie latérale (3) est associée à chaque deuxième patte de chaîne, s'étend, à partir de la zone d'extrémité sur l'entraîneur, sur au moins un tiers de la longueur totale de la chaîne porte-câbles; et/ou
- **en ce que** les deux brins de pattes (1A, 1B) sont constitués en continu, entre leurs zones d'extrémité, de pattes de chaîne (2) et de parties latérales (3) de construction identique.

15. **Maillon de chaîne** (5A) pour une chaîne de porte-câbles (1), comprenant deux pattes de chaîne (2) opposées en métal avec des ouvertures (21; 22) dans une première zone de chevauchement (2A) et des ouvertures (21; 22) dans une deuxième zone de chevauchement (2B) de la patte de chaîne respective,
**caractérisé en ce qu**'il est prévu latéralement à chacune des deux pattes de chaîne (2) opposées respectivement une partie latérale (3) en matière plastique, qui présente deux zones d'extrémité (3A, 3B) avec respectivement au moins une saillie (31; 32), en particulier avec un nombre de saillies (21; 22) correspondant au nombre d'ouvertures (21; 22) d'une zone de chevauchement (2A, 2B), l'au moins une saillie (31; 32) s'engageant à travers une ouverture (21; 22) de la patte de chaîne (2) associée, la partie latérale s'engageant à l'aide de ses saillies à travers les deux zones de chevauchement de la patte de chaîne qui lui est associée.
